(19) Europäisches Patentamt
European Patent Office
Office européen des brevets

(11) **EP 1 483 760 B1**

(12) **EUROPEAN PATENT SPECIFICATION**

(45) Date of publication and mention
of the grant of the patent:
**30.09.2009 Bulletin 2009/40**

(51) Int Cl.:
***G11B 7/013*** (2006.01)

(21) Application number: **03701673.0**

(22) Date of filing: **07.02.2003**

(86) International application number:
**PCT/IB2003/000456**

(87) International publication number:
**WO 2003/075265 (12.09.2003 Gazette 2003/37)**

(54) **DEVICE, RECORD CARRIER AND METHOD FOR RECORDING INFORMATION**

VORRICHTUNG, AUFZEICHNUNGSTRÄGER UND VERFAHREN ZUR INFORMATIONSAUFZEICHNUNG

DISPOSITIF, SUPPORT D'ENREGISTREMENT ET PROCEDE D'ENREGISTREMENT D'INFORMATIONS

(84) Designated Contracting States:
**AT BE BG CH CY CZ DE DK EE ES FI FR GB GR HU IE IT LI LU MC NL PT SE SI SK TR**

(30) Priority: **05.03.2002 EP 02075892**

(43) Date of publication of application:
**08.12.2004 Bulletin 2004/50**

(73) Proprietor: **Koninklijke Philips Electronics N.V.**
**5621 BA Eindhoven (NL)**

(72) Inventors:
• **NIJBOER, Jakob, G.**
**NL-5656 AA Eindhoven (NL)**
• **WEIJENBERGH, Paulus, G., P.**
**NL-5656 AA Eindhoven (NL)**

(74) Representative: **Uittenbogaard, Frank**
**Philips**
**Intellectual Property & Standards**
**P.O. Box 220**
**5600 AE Eindhoven (NL)**

(56) References cited:
EP-A- 1 134 738          EP-A- 1 209 679
WO-A-01/27922          WO-A-02/49019
WO-A-02/086731

## Description

The invention relates to a device for recording information on a track (9) of a record carrier, which record carrier comprises a disc information area comprising a disc information block comprising a parameter for controlling the recording of information on the track of the record carrier, the device comprising disc information reading means for reading the disc information block.

The invention further relates to a record carrier having a track for recording information, the record carrier comprising a disc information area comprising a disc information block comprising a parameter for controlling the recording of information on the track of the record carrier.

The invention further relates to a method of recording information on a track of a record carrier, which record carrier comprises a disc information area comprising a disc information block comprising a parameter for controlling the recording of information on the track of the record carrier, the method comprising a step of reading the disc information area.

A device and record carrier for recording information signals on a record carrier is known from US 5,001,692. The record carrier is pre-recorded with a readable adjustment information which is indicative of the write signal wave forms required for the relevant record carrier material. The device for recording information signals comprises a read device for reading such adjustment information on the record carrier during a time interval prior to recording the information signal. The recording apparatus further comprises an adjustment circuit for adjusting the write signal waveforms in conformity with the readout adjustment information, by adapting the relationship between the write signals and the information signals. Thus, prior to recording, the write signal waveforms are always adapted automatically to the record carrier then present in the device. The readable adjustment information are parameters used in the writing process.

EP1134738 discloses within a sub-code to be recorded in a recording medium, the physical characteristics of the recording medium are recorded. This enables a recording apparatus or a reading apparatus to easily and correctly determine the physical characteristics of the recording medium by reading the subcode. The physical characteristic information includes information concerning the material, the disc type, the linear velocity, the track pitch, the moment of inertia, the size/configuration of the recording medium and a version number of the physical characteristics of the recording medium.

With increasing speeds for reading and writing information signals on a record carrier the write strategy is constantly changing. For different write strategies different parameters are required. When additional parameters are added on the known record carrier the recording devices already on the market are unable to interpret these additional parameters, or these additional parameters are interpreted incorrectly. Consequently the record carrier is recorded with a wrong writing strategy or the record carrier is not recorded at all.

It is an object of the invention to provide a system with a better backwards compatibility.

For this purpose, the device as described in the opening paragraph is **characterized in that** the disc information reading means are arranged for reading at least one extended information block in the disc information area which extended information block comprises at least one additional parameter and a block version number indicator indicative of the definition of the additional parameter. The record carrier as described in the opening paragraph is **characterized in that** the disc information area further contains at least one extended information block which extended information block comprises at least one additional parameter and a block version number indicator indicative of the definition of the additional parameter. The method as described in the opening paragraph is **characterized in that** the method further comprises a step of reading at least one extended information block in the disc information area which extended information block comprises at least one additional parameter and a block version number indicator indicative of the definition of the additional parameter.

This has the advantage that the device according to the invention is able to establish from the block version number if it is able to interpret the additional parameters. If that is the case, the device can use these additional parameters. If the device establishes from the block version number that it is not able to interpret the additional parameter, than it will not use the additional parameters and use the standard parameters in the information area. If there are more than one extended information blocks then the device establishes which of the extended information blocks contain a block version number for which it is able to interpret the additional parameters and chooses the additional parameters which are best suited for that device. In this way the recording device always is able to read the relevant information from the information area, even if additional parameters are added on new record carriers.

In an embodiment of the recording device the disc information reading means are arranged for reading the disc information area of a record carrier which disc information area comprises extended information indicators which indicate the presence and location of the extended information blocks. In this way the recording device can establish from the extended information indicators if there are extended information blocks, and if so, where they are located. This increases the speed in which the recording device acquires the additional parameters.

In a further embodiment of the recording device the disc information reading means are arranged for reading the disc information area of a record carrier which disc information area comprises more than one extended information block and a predetermined value of the block version number of an extended information block indicates that that parameter block is a continuation of a preceding extended information block. If at one point in time the size of an extended information block is too small to contain all the additional parameters, it is possible to use the next extended information block by setting the value of the block version to a predetermined value indicating that the next extended information block is a continuation of the previous extended information block. In this manner much more additional parameters with the same block version number can be stored in a unit of two or more extended information blocks.

These and other aspects of the invention will be apparent from and elucidated further with reference to the embodiments described by way of example in the following description and with reference to the accompanying drawings, in which

Fig. 1a shows a record carrier (top view),
Fig. 1b shows a record carrier (cross section),
Fig. 2 shows a recording device,
Fig. 3 shows the alignment of ADIP and information blocks,
Fig. 4 shows the ADIP word structure,
Fig. 5 shows the ADIP error correction structure,
Fig. 6 shows the ADIP modulation rules,
Fig. 7 shows a table of the disc information area,
Fig. 8 shows leading edge correction times,
Fig. 9 shows the record carrier sector numbering,
Fig. 10 shows a layout of a recorded single-session disc,
Fig. 11 shows the Inner Drive Area,
Fig. 12 shows a format of a Session Map block,
Fig. 13 shows a session item,
Fig. 14 shows Recorded Area Indicators,
Fig. 15 shows the Lead-in Zone,
Fig. 16 shows the structure of a Control Data Block,
Fig. 17 shows the Lead-Out zone,
Fig. 18 shows the Outer Drive Area,
Fig. 19 shows the layout of the Information Zone of a Multi-session disc,
Fig. 20 shows details of opened Session n,
Fig. 21 shows the general format of a Disc Control Block (DCB),
Fig. 22 shows the Format of the Session DCB (SDCB),
Fig. 23 shows a Reserved Area item, and
Fig. 24 shows a Previous Session item.

Corresponding elements in different Figures have identical reference numerals.

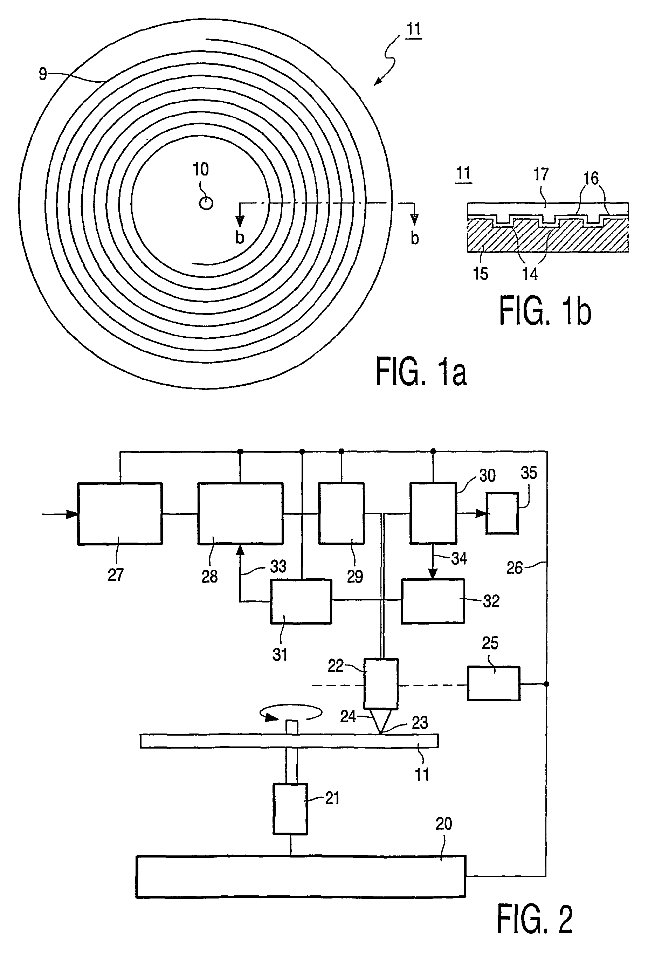

Figure 1a shows a disc-shaped record carrier 11 having a track 9 and a central hole 10. The track 9, being the position of the series of (to be) recorded marks representing information, is arranged in accordance with a spiral pattern of turns constituting substantially parallel tracks on an information layer. The record carrier may be optically readable, called an optical disc, and has an information layer of a recordable type. Examples of a recordable disc are the CD-R and CD-RW, and writable versions of DVD, such as DVD+RW. Further details about the DVD disc can be found in reference: *ECMA-267: 120 mm DVD - Read-Only Disc - (1997).* The information is represented on the information layer by recording optically detectable marks along the track, e.g. crystalline or amorphous marks in phase change material. The track 9 on the recordable type of record carrier is indicated by a pre-embossed track structure provided during manufacture of the blank record carrier. The track structure is constituted, for example, by a pregroove 14 which enables a read/write head to follow the track during scanning. The track structure comprises position information, e.g. addresses, for indication the location of units of information, usually called information blocks. The position information includes specific synchronizing marks for locating the start of such information blocks. The position information is encoded in frames of modulated wobbles as described below.

Figure 1b is a cross-section taken along the line b-b of the record carrier 11 of the recordable type, in which a transparent substrate 15 is provided with a recording layer 16 and a protective layer 17. The protective layer 17 may comprise a further substrate layer, for example as in DVD where the recording layer is at a 0.6 mm substrate and a further substrate of 0.6 mm is bonded to the back side thereof. The pregroove 14 may be implemented as an indentation or an elevation of the substrate 15 material, or as a material property deviating from its surroundings.

The record carrier 11 is intended for carrying information represented by modulated signals comprising frames. A frame is a predefined amount of data preceded by a synchronizing signal. Usually such frames also comprise error correction codes, e.g. parity words. A number of such frames constitute an information block, the information block comprising further error correction words. The information block is the smallest recordable unit from which information can be reliably retrieved. An example of such a recording system is known from the DVD system, in which the frames carry 172 data words and 10 parity words, and 208 frames constitute an ECC block.

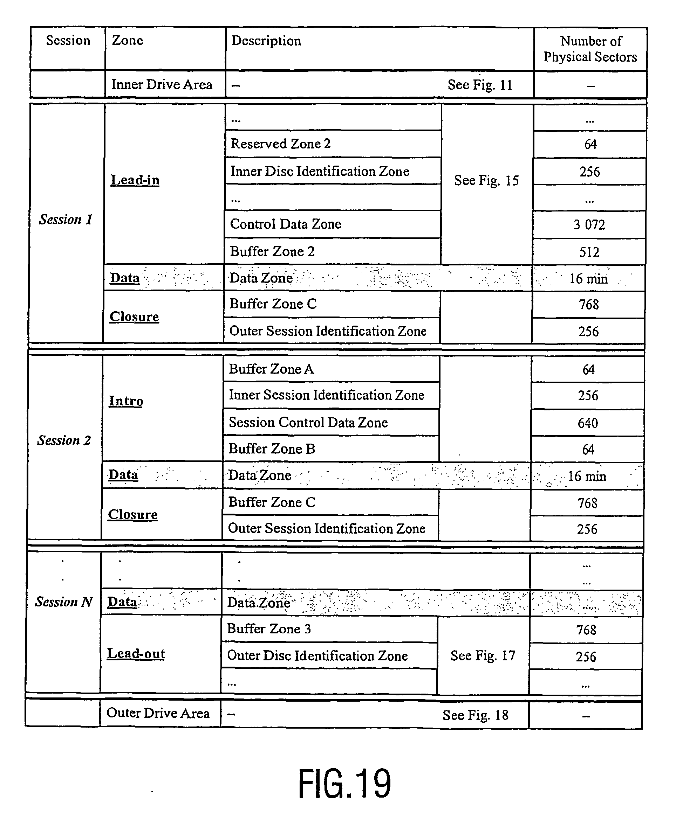

In an embodiment of the record carrier the track comprises multi-session information according to the format described below with reference to Figures 19 to 24.

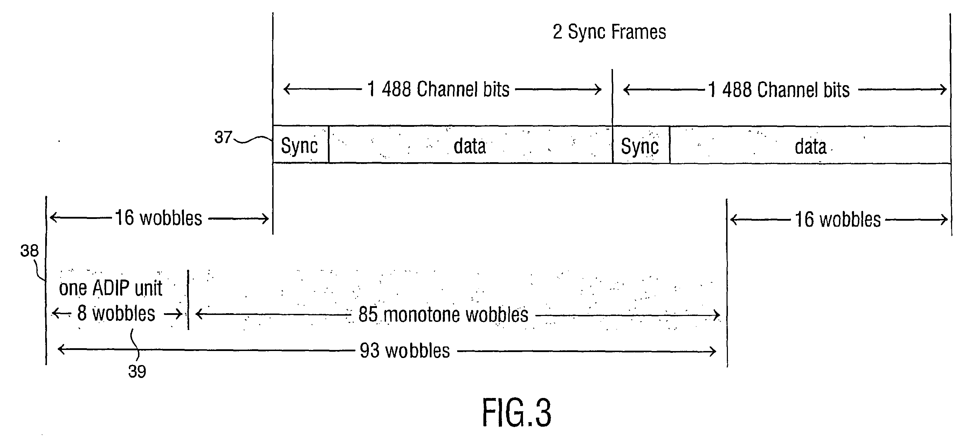

Figure 2 shows a recording device for writing information on a record carrier 11 of a type which is writable or re-writable, for example CD-R or CD-RW. The device is provided with recording means for scanning the track on the record carrier which means include a drive unit 21 for rotating the record carrier 11, a head 22, a positioning unit 25 for coarsely positioning the head 22 in the radial direction on the track, and a control unit 20. The head 22 comprises an optical system of a known type for generating a radiation beam 24 guided through optical elements focused to a radiation spot 23 on a track of the information layer of the record carrier. The radiation beam 24 is generated by a radiation source, e.g. a laser diode. The head further comprises (not shown) a focusing actuator for moving the focus of the radiation beam 24 along the optical axis of said beam and a tracking actuator for fine positioning of the spot 23 in a radial direction on the center of the track. The tracking actuator may comprise coils for radially moving an optical element or may alternatively be arranged for changing the angle of a reflecting element. For writing information the radiation is controlled to create optically detectable marks in the recording layer. For reading, the radiation reflected by the information layer is detected by a detector of a usual type, e.g. a four-quadrant diode, in the head 22 for generating a read signal and further detector signals including a tracking error and a focusing error signal for controlling said tracking and focusing actuators. The read signal is processed by read processing unit 30 of a usual type including a demodulator, deformatter and output unit to retrieve the information. Hence retrieving means for reading information include the drive unit 21, the head 22, the positioning unit 25 and the read processing unit 30. The device comprises write processing means for processing the input information to generate a write signal to drive the head 22, which means comprise an input unit 27, and modulator means comprising a formatter 28 and a modulator 29. The control unit 20 controls the recording and retrieving of information and may be arranged for receiving commands from a user or from a host computer. The control unit 20 is connected via control lines 26, e.g. a system bus, to said input unit 27, formatter 28 and modulator 29, to the read processing unit 30, and to the drive unit 21, and the positioning unit 25. The control unit 20 comprises control circuitry, for example a microprocessor, a program memory and control gates, for performing procedures and functions as described below with reference to Figures 3 to 24. The control unit 20 may also be implemented as a state machine in logic circuits. During the writing operation, marks representing the information are formed on the record carrier. The marks may be in any optically readable form, e.g. in the form of areas with a reflection coefficient different from their surroundings, obtained when recording in materials such as dye, alloy or phase change material, or in the form of areas with a direction of magnetization different from their surroundings, obtained when recording in magneto-optical material. Writing and reading of information for recording on optical disks and usable formatting, error correcting and channel coding rules are well-known in the art, e.g. from the CD system. The marks can be formed by means of the spot 23 generated on the recording layer via the beam 24 of electromagnetic radiation, usually from a laser diode. User information is presented on the input unit 27, which may comprise of compression means for input signals such as analog audio and/or video, or digital uncompressed audio/video. Suitable compression means are described for audio in WO 98/16014-A1 (PHN 16452), and for video in the MPEG2 standard. The input unit 27 processes the audio and/or video to unit of information, which are passed to the formatter 28 for adding control data and formatting the data according to the recording format (as described below), e.g. by adding error correction codes (ECC) and/or interleaving. For computer applications units of information may be interfaced to the formatter 28 directly. The formatted data from the output of the formatter 28 is passed to the modulation unit 29, which comprises for example a channel coder, for generating a modulated signal which drives the head 22. Further the modulation unit 29 comprises synchronizing means for including synchronizing patterns in the modulated signal. The formatted units presented to the input of the modulation unit 29 comprise address information and are written to corresponding addressable locations on the record carrier under the control of control unit 20. The control unit 20 is arranged for recording and retrieving position data indicative of the position of the recorded information volumes. The device has mapping means comprising a mapping unit 31 coupled to the control unit 20 and detection means comprising a detection unit 32 coupled to the control unit 20 and the mapping unit 31. The mapping unit 31 has an output 33 coupled to the formatter 28 for writing session map blocks in a session map zone as described below. The detection unit 32 has an input 34 coupled to the read unit 30 for detecting the session map blocks from the session map zone. The detection unit 32 is coupled to the mapping unit 31 for transferring data from detected session map blocks for generating new session map blocks including the existing data. The mapping unit 31 is arranged for determining the position of the recorded information volume, also called session, in particular the start and end address of each closed session. First a session is opened by writing an intro zone, then user data can be written by a number of writing commands, and finally the session is closed by filling all remaining blank areas and recording session control blocks and a closure part at the end zone of that volume, as described below.

The disc information reading means 35 are coupled to the read unit. The disc information reading means 35 are able to read the disc information area. The disc information reading means 35 are arranged for reading extended information blocks in the disc information area. The device can proceed to read the disc information area in the following manner. First the drive checks which extended information blocks are in use by reading the extended information indicators. Next the drive checks the block version numbers of those extended information blocks. If the drive is not acquainted with certain block version numbers it shall ignore the groups with those numbers. The information in the extended information blocks of which the numbers are familiar to the drive can be interpreted. From these extended information blocks the drive can choose the information which best fits its capabilities. As an example a disc contains two extended information blocks with the same block version number. The first extended information block contains a 4x write strategy according to a certain pulse train shape, with the speed range, the pulse durations and power levels specified by its bytes. The second extended information block contains a 8x write strategy according to the same pulse train shape, however with a different speed range, different pulse durations and/or different power levels specified by its bytes, i.e. the meaning of the bytes is the same, only values are different. The newest drives can choose the record the disc at 8x speed. The older drives (capable of interpreting information in the second group, but not capable of 8x) can chose to record at 4x speed. The first generation drives can fall back to the basic strategy, available in the first part of the disc information area. As an other example a disc contains two extended information blocks with different block version numbers. The first extended information block contains a 4x write strategy according to a certain pulse train shape, with the speed range, the pulse durations and power levels specified by its bytes. The second extended information block contains a 8x write strategy according to different pulse train shape, with a different speed range, and other pulse durations and power levels definitions specified by its bytes, i.e. the meaning of the bytes can be completely different. The newest drives (familiar with the newer block version number) can choose to record the disc at 8x speed. The older drives (not capable of interpreting information in the second extended information block) can only choose to record at 4x speed. The first generation drives can still fall back to the basic strategy.

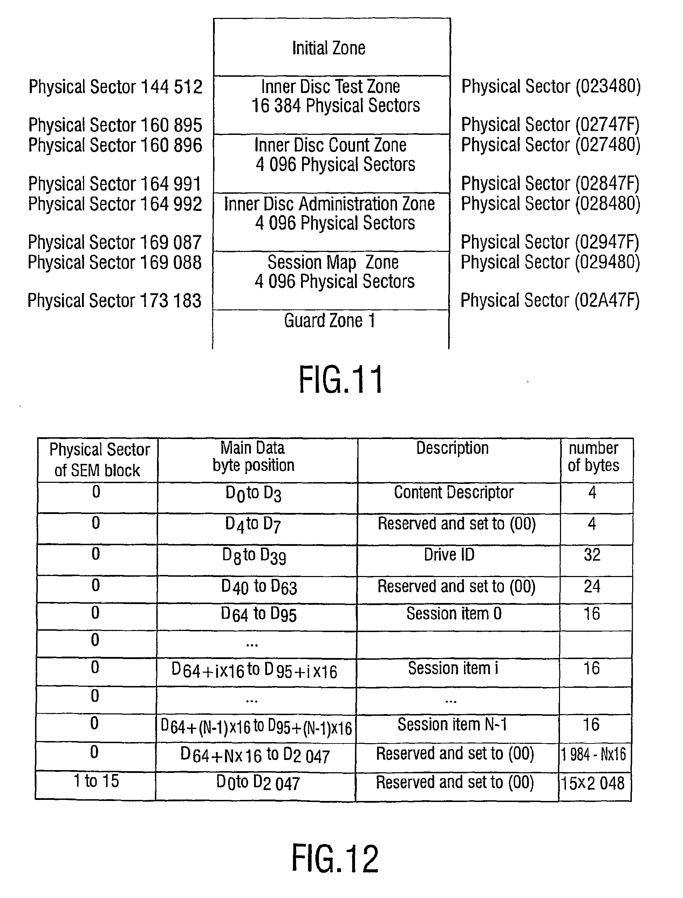

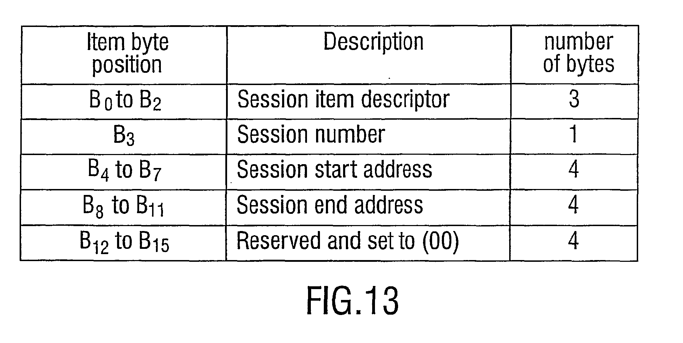

The mapping unit is arranged for recording consecutive session map blocks. When a session is completed a next session map block is recorded, which comprises a session item for each closed session as described below with reference to Figures 12 and 13.

The system specifies the mechanical, physical and optical characteristics of a 120 mm recordable optical discs with capacities of 4,7 Gbytes and 9,4 Gbytes. It specifies the quality of the recorded and unrecorded signals, the format of the data and the recording method, thereby allowing for information interchange by means of such discs. The data can be written once and read many times using a non-reversible method. These discs are identified as DVD+R. The track shape is as follows. The recordable area, called the Information Zone, shall contain tracks formed from a single spiral groove. Each track shall form a 360° turn of a continuous spiral. Recordings shall be made in the groove. The tracks in the Information Zone contain a phase modulated sinusoidal deviation from the nominal centrelines, called wobble, which contains addressing information called Address-in-Pregroove or ADIP. The tracks shall be continuous in the Information Zone. The groove tracks shall start at a radius of 22,0 mm max. and end at a radius of 58,50 mm min. The track path shall be a continuous spiral from the inside (beginning of the Lead-in Zone) to the outside (end of the Lead-out Zone) when the disc rotates counter-clockwise as viewed from the optical head. The track pitch is the distance measured between the average track centrelines of adjacent tracks, measured in the radial direction. The track pitch shall be 0,74 $\mu$m $\pm$ 0,03 $\mu$m. The track pitch averaged over the Information Zone shall be 0,74 $\mu$m $\pm$ 0,01 $\mu$m. The wobble of the tracks is a sinusoidal deviation from the nominal centrelines, with a wavelength of 4,265 6 $\mu$m + 0,045 0 $\mu$m (equivalent to 32 Channel bits). The Total Harmonic Distortion (THD) of the oscillator for generating the wobble sine wave shall be $\leq$ -40 dB. The wobble is phase modulated by inverting wobble cycles. The information contained in the wobble modulation is called Address-in-Pregroove or ADIP.

Figure 3 shows the alignment of ADIP and information blocks. The information blocks 37 to be recorded onto the disc must be aligned with the ADIP information 39 modulated in the wobble 38. It is shown that 93 wobbles correspond to 2 Sync Frames, which are the start of an information block. Of each 93 wobbles, 8 wobbles are phase modulated with ADIP information. Further 1 wobble equals 32 Channel bits (= 32T) and one ADIP unit = 8 modulated wobbles per 2 Sync Frames.

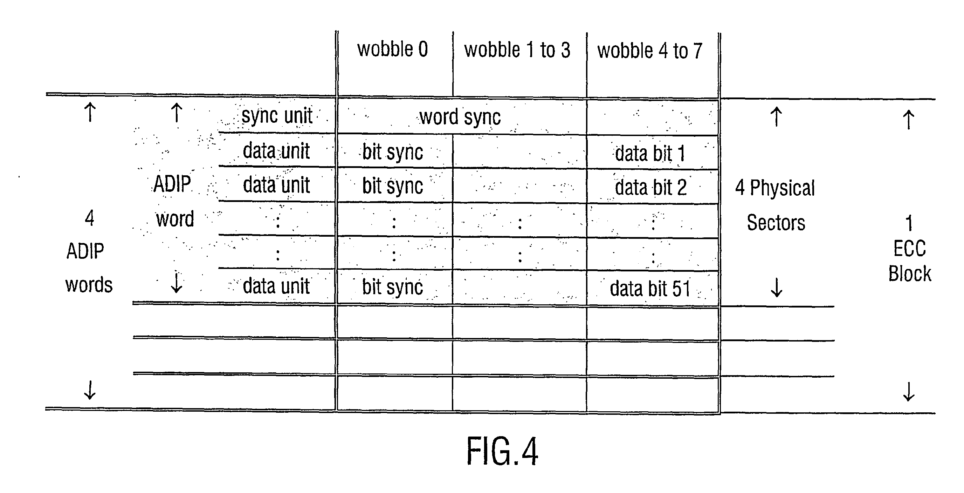

Figure 4 shows the ADIP word structure. 52 ADIP units are grouped into one ADIP word each. This means that one ADIP word corresponds to $4 \times 13 \times 2$ Sync Frames = 4 Physical Sectors. Each ADIP word consists of: 1 ADIP sync unit + 51 ADIP data units. The ADIP sync unit = 4 inverted wobbles for word sync + 4 monotone wobbles. The ADIP data unit = 1 inverted wobble for bit sync + 3 monotone wobbles + 4 wobbles representing one data bit. (see 0) The information contained in the data bits of an ADIP word is as follows:

bit 1: this bit is reserved and shall be set to ZERO.
bit 2 to 23: these 22 bits contain a Physical Address. Data bit 2 is the most significant bit (MSB) and data bit 23 is the least significant bit (LSB). The addresses increase by one for each next ADIP word. The first address in the Information Zone shall be such that Physical Address (00C000) is located at radius $24{,}0^{+0,0}_{-0,2}\,\mathrm{mm}$.

bit 24 to 31: these 8 bits contain auxiliary information about the disc, e.g. recording control information. In the Data Zone and the Lead-out Zone of the disc the auxiliary bytes shall be set to (00). In the Lead-in Zone of the disc the auxiliary bytes shall be used as follows:

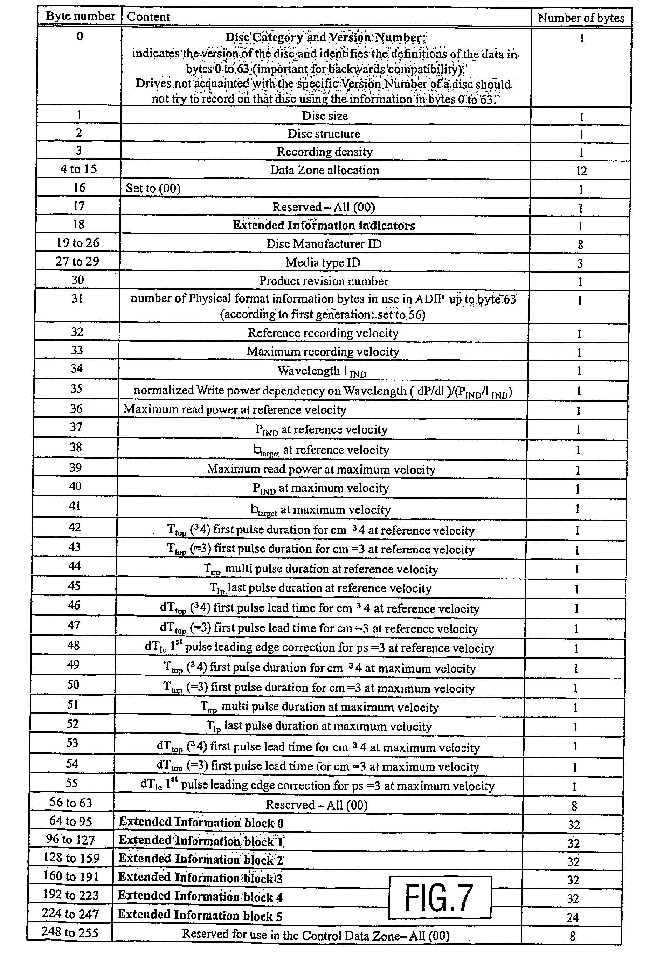

Bit 24 to 31 from 256 consecutive ADIP words shall form one ADIP Aux Frame with 256 bytes of information. The first byte of each ADIP Aux Frame shall be located in an ADIP word with a Physical Address that is a multiple of 256 (Physical Address = (xxxx00)). The contents of the 256 bytes are defined in Figure 7.

bit 32 to 51: these 20 bits contain error correction parities for the ADIP information.

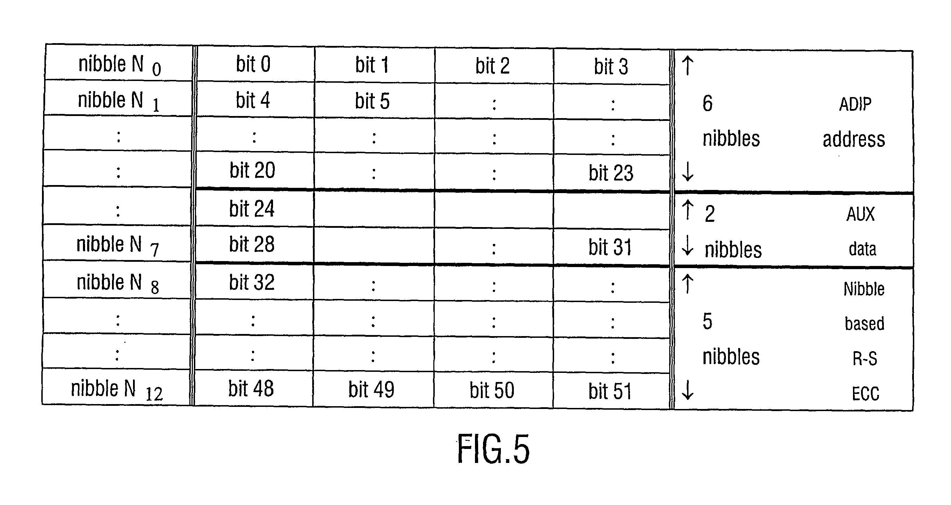

Figure 5 shows the ADIP error correction structure. For the ADIP error correction the ADIP data bits are grouped into 4-bit nibbles. The mapping of the data bits into the nibble array is defined in Figure 5. Bit 0 is a dummy bit, which shall be considered as set to ZERO for the error corrector.

A nibble-based RS (13,8,6) code is constructed, of which the 5 parity nibbles $N_8$ to $N_{12}$, are defined by the remainder polynomial R(x):

$$R(x) = \sum_{i=8}^{12} N_i\, x^{12-i} = I(x)\, x^5 \bmod G_{PA}(x)$$

where

$$I(x) = \sum_{i=0}^{7} N_i\, x^{7-i}$$

$$G_{PA}(x) = \prod_{k=0}^{4} (x + \alpha^k)$$

$\alpha\ \square$ is the primitive root 0010 of the primitive polynomial $P(x) = x^4 + x + 1$

All bits of the 5 parity nibbles $N_8$ to $N_{12}$ shall be inverted before recording.

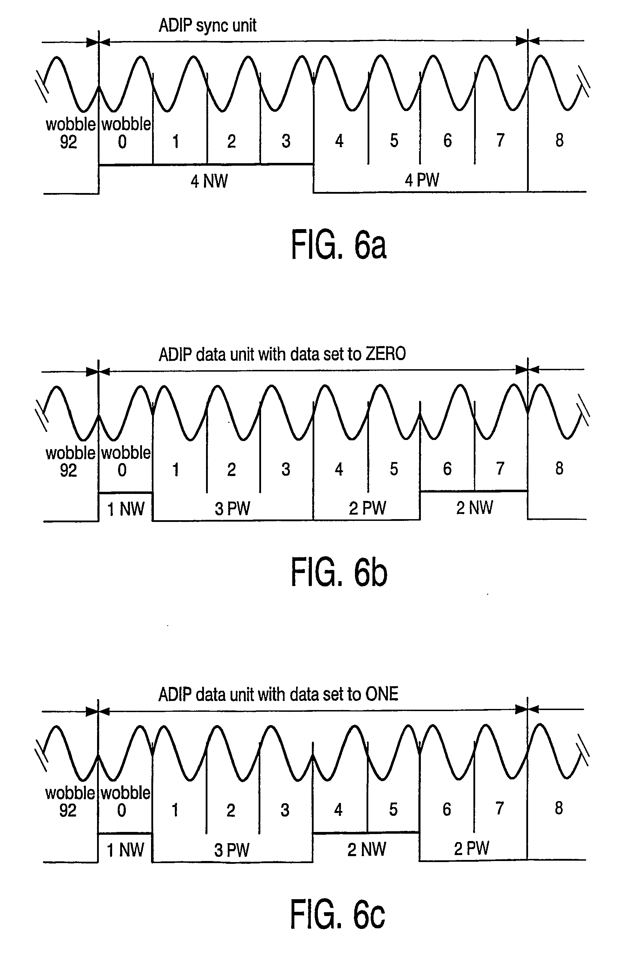

Figure 6 shows the ADIP modulation rules. The ADIP units are modulated by inverting some of the 8 wobble cycles. Figure 6a shows Modulation of the ADIP word sync, Figure 6b shows Modulation of an ADIP ZERO bit, and Figure 6c shows Modulation of an ADIP ONE bit, wherein

- PW is a positive wobble, which starts moving towards the inside of the disc.
- NW is a negative wobble, which starts moving towards the outside of the disc.
- all monotone wobbles are indicated as PWs.

Figure 7 shows a table of an example of the disc information area according to the invention. The disc information area shall hereinafter also referred to as Physical disc information. The Physical disc information is encoded in ADIP as described above. This information shall comprise the 256 bytes shown in Figure 7. It contains disc information and values used for the Optimum Power Control (OPC) algorithm to determine optimum laser power levels for writing. The information is copied into a recordable zone called the Control Data during initialization of the disc. The data contents are for example:

**Byte 0 - Disc Category and Version Number**

|  |  |
|---|---|
| Bits b7 to b4 | shall specify the Disc Category, they shall be set to 1010, indicating a DVD+R disc. |
| Bits b3 to b0 | shall specify the Version Number, they shall be set to 0000 indicating the version |

**Byte 1 - Disc size and maximum transfer rate**

Bits b7 to b4    shall specify the disc size,

(continued)

they shall be set to 0000, indicating a 120 mm disc

Bits b3 to b0    shall specify the maximum read transfer rate,

they shall be set to 1111 indicating no maximum read transfer rate is specified

**Byte 2 - Disc structure**

Bit b7 to b4    shall be set to 0000

Bits b3 to b0    shall specify the type of the recording layer(s):

they shall be set to 0010, indicating a write-once recording layer.

**Byte 3 - Recording density**

Bits b7 to b4    shall specify the average Channel bit length in the Information Zone,

they shall be set to 0000, indicating 0,133 $\mu$m

Bits b3 to b0    shall specify the average track pitch,

they shall be set to 0000, indicating an average track pitch of 0,74 $\mu$m

**Bytes 4 to 15 - Data Zone allocation**

| | |
|---|---|
| Byte 4 | shall be set to (00). |
| Bytes 5 to 7 Byte 8 | shall be set to (030000) to specify PSN 196.608 of the first Physical Sector of the Data Zone shall be set to (00). |
| Bytes 9 to 11 | shall be set to (26053F) to specify PSN 2.491.711 as the last possible Physical Sector of the Data Zone. |
| Bytes 12 to 15 | shall be set to (00) |

**Byte 16 - (00)**shall be set to (00).

**Byte 17 - Reserved.** This byte is reserved and shall be set to (00).

**Byte 18 - Extended information indicators**

Bits b7 to b6    are reserved and shall be set to 00

Bits b5 to b0    each of these bits shall indicate the presence of an Extended Information block. Bit $b_i$ shall be set to 1 if Extended Information block i, consisting of bytes $(64 + i \times 32)$ to $(95 + i \times 32)$, is in use. Else bit $b_i$ shall be set to 0.

**Bytes 19 to 26 - Disc Manufacturer ID.**

These 8 bytes shall identify the manufacturer of the disc. Trailing bytes not used shall be set to (00).

**Bytes 27 to 29 - Media type ID.**

Disc manufacturers can have different types of media, which shall be specified by these 3 bytes. The specific type of disc is denoted in this field.

**Byte 30 - Product revision number.**

This byte shall identify the product revision number in binary notation. All discs with the same Disc Manufacturer ID and the same Product ID, regardless of Product revision numbers, must have the same recording properties (only minor differences are allowed: Product revision numbers shall be irrelevant for recorders). If not used this byte shall be set to (00)

**Byte 31 number of Physical format information bytes in use.**

This byte forms one 8-bit binary number indicating the number of bytes actually in use for Physical format information. It shall be set to (36) indicating that only the first 54 bytes of the Physical format information are used.

**Byte 32 - Reference recording velocity.**

This byte indicates the lowest possible recording velocity of the disc, which is also referred to as the Reference velocity, as a number n such that

$$n = 10 \times v_{ref} \text{ (n rounded off to an integral value)}$$

It shall be set to (23) indicating a Reference writing speed of 3,49 m/s.

**Byte 33 - Maximum recording velocity.**

This byte indicates the highest possible recording velocity of the disc, as a number n such that

$$n = 10 \times v_{ref} \text{ (n rounded off to an integral value)}$$

It shall be set to (54) indicating a maximum writing speed of 8,44 m/s.

**Byte 34 - Wavelength $\lambda$IND.**

This byte shall specify the wavelength in nanometers of the laser with which the optimum write parameters in the following bytes have been determined, as a number n such that

$$n = \text{Wavelength} - 600$$

**Byte 35 Reserved**

**Byte 36 Maximum read power, Pr at reference velocity.**

This byte shall specify the maximum read power Pr in milliwatts at the reference velocity as a number n such that

$$n = 20 \times (Pr - 0,7)$$

**Byte 37 - PIND at reference velocity.**

PIND is the starting value for the determination of Ppo used in the OPC algorithm. This byte shall specify the indicative value PIND ofPpo in milliwatts at the reference velocity as a number n such that

$$n = 20 \times (P_{IND} - 5)$$

**Byte 38 - $\beta_{target}$ at reference velocity.**

This byte shall specify the target value for $\beta$, $\beta_{target}$ at the reference velocity used in the OPC algorithm as a number n such that

$$n = 10 \times \beta_{target}$$

**Byte 39 - Maximum read power, Pr at maximum velocity.**

This byte shall specify the maximum read power Pr in milliwatts at the maximum velocity as a number n such that

$$n = 20 \times (Pr - 0,7)$$

**Byte 40 - $P_{IND}$ at maximum velocity.**

$P_{IND}$ is the starting value for the determination of Ppo used in the OPC algorithm. This byte shall specify the indicative value PIND ofPpo in milliwatts at the maximum velocity as a number n such that

$$n = 20 \times (PIND - 5)$$

**Byte 41 - $\beta_{target}$ at maximum velocity.**

This byte shall specify the target value for $\beta$, $\beta_{target}$ at the maximum velocity used in the OPC algorithm as a number n such that

$$n = 10 \times \beta_{target}$$

**Byte 42 - Ttop (≥4) first pulse duration for current mark ≥4 at reference velocity.**
This byte shall specify the duration of the first pulse of the multi pulse train when the current mark is a 4T or greater mark for recording at reference velocity. The value is expressed in fractions of the channel bit clock period as a number n such that

$$n = 16 \times \frac{T_{top}}{T_W} \qquad \text{and} \qquad 4 \leq n \leq 40$$

**Byte 43 - Ttop (=3) first pulse duration for current mark =3 at reference velocity.**
This byte shall specify the duration of the first pulse of the multi pulse train when the current mark is a 3T mark for recording at reference velocity. The value is expressed in fractions of the channel bit clock period as a number n such that

$$n = 16 \times \frac{T_{top}}{T_W} \qquad \text{and} \qquad 4 \leq n \leq 40$$

**Byte 44 - Tmp multi pulse duration at reference velocity.**
This byte shall specify the duration of the 2nd pulse through the 2nd to last pulse of the multi pulse train for recording at reference velocity. The value is expressed in fractions of the channel bit clock period as a number n such that

$$n = 16 \times \frac{T_{mp}}{T_W} \qquad \text{and} \qquad 4 \leq n \leq 16$$

**Byte 45 - Tlp last pulse duration at reference velocity.**
This byte shall specify the duration of the last pulse of the multi pulse train for recording at reference velocity. The value is expressed in fractions of the channel bit clock period as a number n such that

$$n = 16 \times \frac{T_{lp}}{T_W} \qquad \text{and} \qquad 4 \leq n \leq 24$$

**Byte 46 - dTtop first pulse lead time at reference velocity.**
This byte shall specify the lead time of the first pulse of the multi pulse train relative to the trailing edge of the second channel bit of the data pulse for recording at reference velocity. The value is expressed in fractions of the channel bit clock period as a number n such that

$$n = 16 \times \frac{dT_{top}}{T_W} \qquad \text{and} \qquad 0 \leq n \leq 24$$

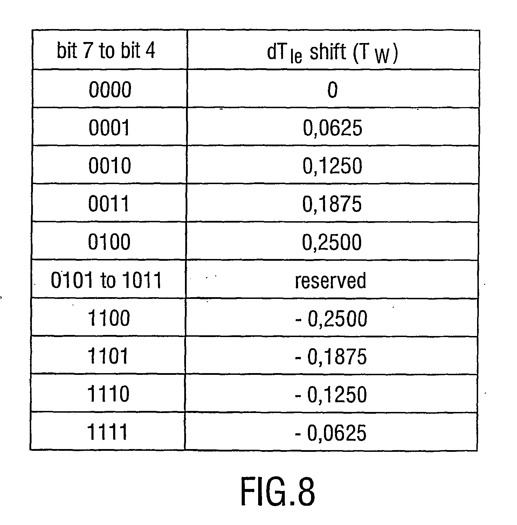

**Byte 47 - dTle 1st pulse leading edge correction for previous space =3 at reference velocity.**
Bit 7 to bit 4 of this byte shall specify the leading edge correction for the 1st pulse of the multi pulse train when the previous space was a 3T space for recording at reference velocity. The value is expressed in fractions of the channel bit clock period according to Figure 8.

**Byte 48 - Ttop (≥4) first pulse duration for current mark ≥4 at maximum velocity.**
This byte shall specify the duration of the first pulse of the multi pulse train when the current mark is a 4T or greater mark for recording at maximum velocity. The value is expressed in fractions of the channel bit clock period as a number n such that

$$n = 16 \times \frac{T_{top}}{T_W} \qquad \text{and} \qquad 4 \leq n \leq 40$$

**Byte 49 - Ttop (3) first pulse duration for current mark =3 at maximum velocity.**
This byte shall specify the duration of the first pulse of the multi pulse train when the current mark is a 3T mark for recording at maximum velocity. The value is expressed in fractions of the channel bit clock period as a number n such that

$$n = 16 \times \frac{T_{top}}{T_W} \qquad \text{and} \qquad 4 \leq n \leq 40$$

**Byte 50 Tmp multi pulse duration at maximum velocity.**
This byte shall specify the duration of the 2nd pulse through the 2nd to last pulse of the multi pulse train for recording at maximum velocity. The value is expressed in fractions of the channel bit clock period as a number n such that

$$n = 16 \times \frac{T_{mp}}{T_W} \qquad \text{and} \qquad 4 \leq n \leq 16$$

**Byte 51 - Tlp last pulse duration at maximum velocity.**
This byte shall specify the duration of the last pulse of the multi pulse train for recording at maximum velocity. The value is expressed in fractions of the channel bit clock period as a number n such that

$$n = 16 \times \frac{T_{lp}}{T_W} \qquad \text{and} \qquad 4 \leq n \leq 24$$

**Byte 52 - dTtop first pulse lead time at maximum velocity.**
This byte shall specify the lead time of the first pulse of the multi pulse train relative to the trailing edge of the second channel bit of the data pulse for recording at maximum velocity. The value is expressed in fractions of the channel bit clock period as a number n such that

$$n = 16 \times \frac{dT_{top}}{T_W} \qquad \text{and} \qquad 0 \leq n \leq 24$$

**Byte 53 - dTle first pulse leading edge correction for previous space =3 at maximum velocity.**
Bit 7 to bit 4 of this byte shall specify the leading edge correction for the 1 st pulse of the multi pulse train when the previous space was a 3T space for recording at maximum velocity. The value is expressed in fractions of the channel bit clock period according to Figure 8.
**Bytes 54 to 63 - Reserved - All (00).**
These bytes shall be set to all (00).
**Bytes (64 + i$\times$32) to (95 + i$\times$32) - Extended Information block i (i = 0..5)**
To facilitate future extensions, Extended Information blocks are introduced. Each such block consists of 32 bytes. These bytes can hold for instance parameters for an alternative write strategy, e.g. for High-Speed recording, or other advanced parameters. The presence of an Extended Information block shall be indicated by a bit in byte 18.

Byte (64 + i×32) Extended Information block i version number indicates the block version and identifies the definitions of the data in bytes (64 + i×32) to (95 + i×32). A disc can have several Extended Information blocks of which the block version numbers can be the same as well as different.

Drives not acquainted with the specific block version number in block i, should not use the disc with the advanced parameters in this Extended Information block.

If the block version number is set to 255, the related Extended information block is not an independent block but a continuation of the preceding Extended Information block (to be used if 32 bytes are not sufficient for a set of parameters). Bytes (65 + i×32) to (95 + i×32)

these bytes can be used to hold alternative write strategies or other parameters.

**Example for High-speed write strategy parameters**

| Byte 18 | : 0000 0001 indicating Extended Information block 0 is in use. |
| Byte 64 | : 0000 0001 indicating block version 1, for which bytes 65 to 95 have the following meaning: |
| Byte 65 | : Maximum recording velocity for the parameter set in this EI block: n × 0,25 m/s, (max ≤ 63,75 m/s =18.25x = 175 Hz @ R = 58 mm) |
| Byte 66 | : Minimum recording velocity for the parameter set in this EI block: n × 0,25 m/s, (minimum recording velocity is allowed to be = maximum recording velocity) |
| Byte 67 | : reserved and set to (00) |
| Byte 68 to 81 : | parameter set for maximum recording velocity |
| byte 68: | PIND |
| byte 69: | βtarget |
| byte 70: | Ttop (≥4) first pulse duration for cm ≥4 |
| byte 71: | Ttop (=3) first pulse duration for cm =3 |
| byte 72: | Tmp multi pulse duration |
| byte 73: | Tlp last pulse duration |
| byte 74: | dTtop (≥4) first pulse lead time for cm ≥4 |
| byte 75: | dTtop (=3) first pulse lead time for cm =3 |
| byte 76: | dTle 1st pulse leading edge correction for ps =3 |
| byte 77: | dTle 1st pulse leading edge correction for ps =4 |
| byte 78: | reserved and set to (00) |
| byte 79: | reserved and set to (00) |
| byte 80: | reserved and set to (00) |
| byte 81: | reserved and set to (00) |
| Byte 82 to 95 : | parameter set for minimum recording velocity |
| byte 82: | PIND |
| byte 83: | βtarget |
| byte 84: | Ttop (≥4) first pulse duration for cm ≥4 |
| byte 85: | Ttop (=3) first pulse duration for cm =3 |
| byte 86: | Tmp multi pulse duration |
| byte 87: | Tlp last pulse duration |
| byte 88: | dTtop (≥4) first pulse lead time for cm ≥4 |
| byte 89: | dTtop (=3) first pulse lead time for cm =3 |
| byte 90: | dTle 1st pulse leading edge correction for ps =3 |
| byte 91: | dTle 1st pulse leading edge correction for ps =4 |
| byte 92: | reserved and set to (00) |
| byte 93: | reserved and set to (00) |
| byte 94: | reserved and set to (00) |
| byte 95: | reserved and set to (00) |

Figure 8 shows leading edge correction times. The parameter is called $dT_{le}$ and is described above with Figure 7 in byte 47. Bit 3 to bit 0 of this byte shall be set to 0000. Bit combinations not specified shall not be used.

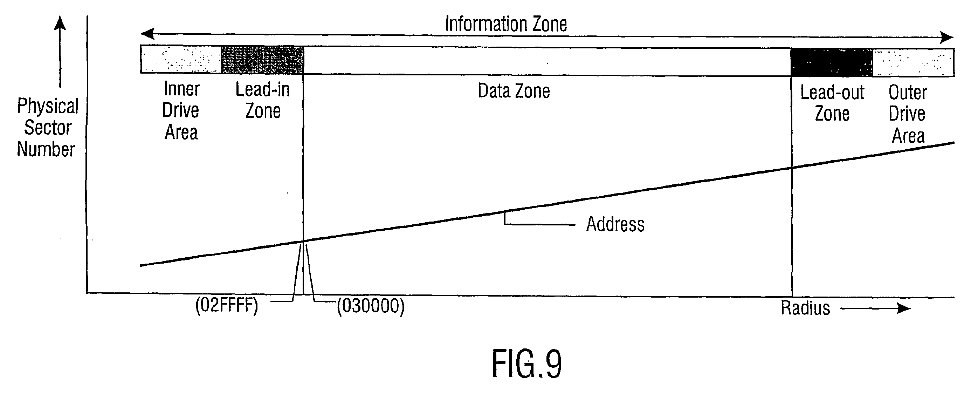

Figure 9 shows the record carrier sector numbering. The recordable area is called information zone. The Information Zone shall contain all information on the disc relevant for data interchange. The Information Zone may contain one or more sessions. Each session shall be divided in three parts: a Lead-in/Intro Zone, a Data Zone and a Lead-out/Closure Zone. In double-sided discs there is one Information Zone per side. The Data Zones are intended for the recording of User Data. The Lead-in Zone contains control information. The Lead-out Zone allows for a continuous smooth lead-out and also contains control information. The Inner and Outer Drive Areas are meant for disc testing. A description is given for a Single-session disc. In such a disc, the Lead-in Zone, the Data Zone and the Lead-out Zone constitute the recordable area in which the information is recorded using a non-reversible effect. The layout of a Multi-session disc is defined later.

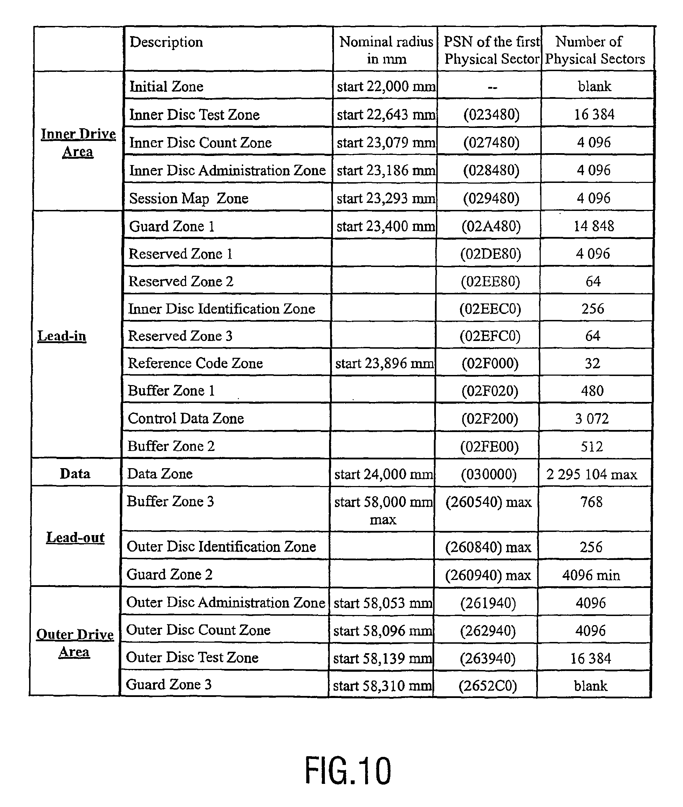

Figure 10 shows a layout of a recorded single-session disc. The Information Zone of single-sided and of each side of double-sided discs are sub-divided in an Inner drive area, a Lead-In, a Data zone, a Lead-Out area and an Outer Drive area. The radii are indicated for the Zones by nominal values of the centre of the first (or last) track of the Zone. Physical Sector Numbers (PSNs) are shown of the first Physical Sector of the each Zone. The Data zone shall have a first PSN (030000). The PSNs increase by 1 for each next Physical Sector in the whole Information Zone.

Figure 11 shows the Inner Drive Area. The Inner Drive Area is the innermost zone of the disc which is used by the drive for performing disc tests and OPC algorithms. The Physical Sector Number of the first and last Physical Sector of each part is indicated in hexadecimal and decimal notation and the number of Physical Sectors in each part are indicated in decimal notation. The following subdivision is shown:

- Initial Zone: This Zone shall remain blank.
- Inner Disc Test Zone: 16384 Physical Sectors reserved for drive testing and OPC.
- Inner Disc Count Zone: 4096 Physical Sectors reserved for counting the number of OPC algorithms performed in the Inner Disc Test Zone. Whenever an ECC Block or part of it in the Inner Disc Test Zone has been recorded, the ECC Block shall be flagged by recording 4 Physical Sectors in the Inner Disc Count Zone.
- Inner Disc Administration Zone: 4096 Physical Sectors to be used for optional drive specific information. The first 16 physical sectors of this Zone shall be filled with all Main Data set to (00). The Inner Disc Administration Zone contains drive information, e.g. a drive identification (Drive ID) and data as defined by the drive manufacturer.
- Session map Zone: 4096 Physical Sectors to store information about the locations of Sessions and recordings on the disc. The first 16 physical sectors of this Zone shall be filled with all Main Data set to (00). This Zone consists of 2 parts:

    part 1: consists of 191 ECC Blocks called Session Map blocks (SEM) to be used to store the locations of all Closed Sessions,
    part 2: consists of 1024 Physical Sectors, grouped in units of 4 sectors, where each unit corresponds to one ADIP word. These units shall be used as Recorded Area Indicators.

Figure 12 shows a format of a Session Map block (SEM). Whenever a Session is closed, the next ECC Block in the Session map Zone, immediately following the last SEM, shall be recorded with the locations of all Closed Sessions. The first ECC Block in the Session map Zone has to be used as a run-in for the second ECC Block. If all 191 blocks have been used, additional Sessions still can be added, however the drive will have to apply a search procedure to find the additional Sessions. The Figure shows the following contents for the SEM for each physical sector:

    Physical Sector 0 / bytes D0 to D3 - Content Descriptor. These bytes identify the Session DCB and shall be set to (544F4300), representing the characters "SDC" and the version number 0.
    Physical Sector 0 / byte D4 to D7 - Reserved. To be set to (00)
    Physical Sector 0 / byte D8 to D39 - Drive ID. These bytes shall contain the drive ID.
    Physical Sector 0 / byte D40 to D63 - Reserved. To be set to (00)
    Physical Sector 0 / byte D64 to D2047 - Session items. These bytes are grouped in units of 16 bytes each. Each unit of 16 bytes can contain a Session item according to Figure 13. All unused bytes shall be set to (00).

Figure 13 shows a session item. The Session Map block (SEM) shall contain a Session item for each Closed Session on the disc. The Session items shall be ordered with increasing numbers and addresses, as follows:

    byte B0 to B2: these 3 bytes identify the item type and shall be set to (53.53.4E), representing the characters "SSN".
    byte B3: this byte shall specify the sequence number of the Session specified in this item.
    byte B4 to B7: these 4 bytes shall specify the PSN of the first Physical Sector in the Data Zone of the Session specified in this item.
    byte B8 to B11: these 4 bytes shall specify the PSN of the last Physical Sector in the Data Zone of the Session specified in this item.
    byte B12 to B 15: these 4 bytes are reserved and shall be set to (00).

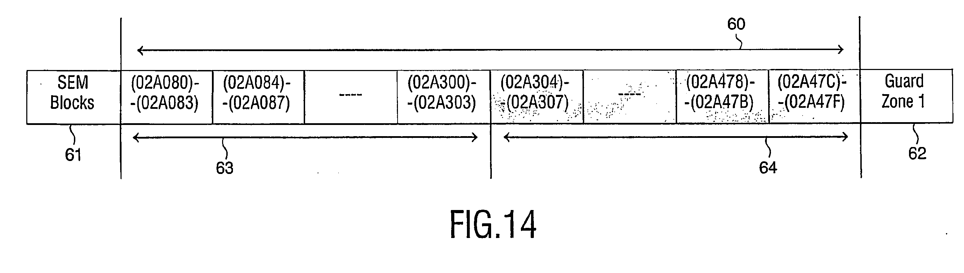

Figure 14 shows Recorded Area Indicators. The last part of the SEM zone for recording SEM blocks 61 is shown schematically. A mapping area 60 is located at the end of the SEM zone. The next zone, i.e. the Guard zone 62, is shown at the right end. The mapping area is recorded starting at the highest address. A recorded part 64 indicates the recorded regions of the recordable area, and the unrecorded part 63 indicates unrecorded regions. To speed up the access of the disc, the recorder needs to know in which region of the disc the last written ECC Block can be found. For this purpose the mapping area is defined, based on recorded areas with the size of 4 Physical Sectors, each area corresponding to one ADIP word. These areas shall be recorded with random EFM signals. No gaps are allowed between recorded ADIP words. 1024 Physical Sectors have been reserved for this purpose, allowing to divide the disc into maximum 256 regions. The Recorded Area Indicators shall be used from the outer side of the SEM Zone towards the inner side of the SEM Zone. By means of an "HF-detection" the recorder can find the location of the start of the Recorded Area Indicators and determine the region in which the last recorded ECC Block can be found. Each region of 640 ECC Blocks between PSN = (030000) and PSN = (26053F) corresponds to one Recorded Area Indicator. All regions up to and including the last recorded ECC Block shall be indicated by their Recorded Area Indicator. In mathematical form: if the first Recorded Area Indicator is composed of the Physical Sectors with PSNRAI to PSNRAI + 3, than the last recorded ECC Block can be found between:

$$PSN = \{(02A47C)\text{-}(PSNRAI)\} \times (A0) + (030000)$$

and

$$PSN = \{(02A47C)\text{-}(PSNRAI)\} \times (A0) + (030280)$$

or in decimal notation:

$$PSN = \{173180\text{-}PSNRAI\} \times 160 + 196608$$

and

$$PSN = \{173180\text{-}PSNRAI\} \times 160 + 197248$$

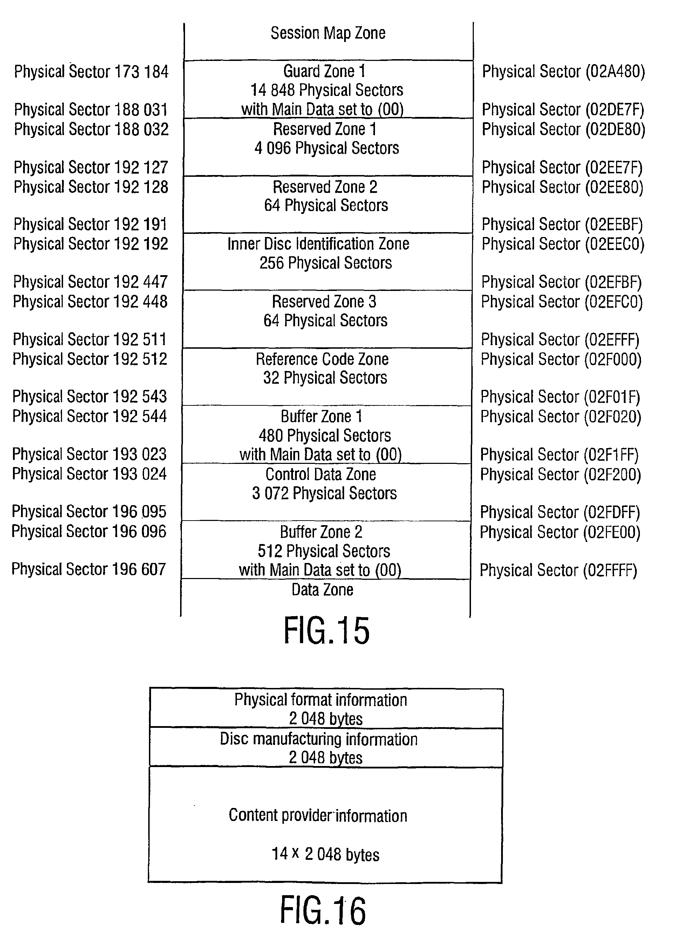

Figure 15 shows the Lead-in Zone. The Lead-in Zone is located at the inner side of the Information Zone. A maiden disc does not have any data recorded in the Lead-in Zone. After finalization of the disc or closing of the first Session, the Lead-in Zone shall be recorded as described below. Figure 15 shows the zones and the addresses, as follows (notation like in Figure 11):

- Guard Zone 1: The Guard Zone is used to create a minimum amount of Lead-in Zone required for compatibility. This zone shall contain 14.848 Physical Sectors, all filled with Main Data set to (00).
- Reserved Zone 1: 4096 Physical Sectors are reserved and shall be set (00).
- Reserved Zone 2: 64 Physical Sectors are reserved and shall be set (00).
- Inner Disc Identification Zone: 256 Physical Sectors reserved for information agreed upon by the data interchange parties. Each set of 16 Physical Sectors from one ECC Block is either a Disc Control Block (DCB) or recorded with all (00) Main Data. Each ECC Block in this Zone following one recorded with all (00) Main Data shall also be recorded with all (00) Main Data.
- Reserved Zone 3: 64 Physical Sectors are reserved and shall be set (00).
- Reference Code Zone: The recorded Reference Code Zone shall consist of the 32 Physical Sectors from two ECC Blocks which generate a specific Channel bit pattern on the disc. This shall be achieved by setting to (AC) all 2048 Main Data bytes of each corresponding Data Frame. Moreover, no scrambling shall be applied to these Data Frames, except to the first 160 Main Data bytes of the first Data Frame of each ECC Block.
- Buffer Zone 1: This Zone shall consist of 480 Physical Sectors from 30 ECC Blocks. The Main Data of the Data Frames in this Zone shall be set to all (00).
- Control Data Zone: This Zone shall consist of 3072 Physical Sectors from 192 ECC Blocks. The content of the 16 Physical Sectors of each ECC Block is repeated 192 times.

- Buffer Zone 2: This recorded Zone shall consist of 512 Physical Sectors from 32 ECC Blocks. The Main Data of the Data Frames in this Zone shall be set to all (00).

Figure 16 shows the structure of a Control Data Block. The first 2048 bytes constitute Physical format information, of which the contents are given in Figure 7. The next 2048 bytes constitute Disc Manufacturing information. The last 14x 2048 bytes are available for Content Provider Information. In an embodiment of the device the 28.672 bytes of Content Provider Information are set to zero (00). Data received from a host be is blocked and not recorded in this field. This prevents data of a confidential nature, for example decryption keys for decoding video of a DVD video disc, to be recorded here. The Physical format information contains disc and format information. The information in bytes 0 to 255 shall be copied from the ADIP auxiliary data during finalization of the disc or closing of the first Session, and shall reflect the actual status of the disc or first Session (e.g. the actual end of the Data Zone). All 256 bytes have the same definitions and contents as the Physical Disc information defined in Figure 7, except the following bytes:

Byte 0 - Disc Category and Version Number

Bits b7 to b4 shall specify the Disc Category indicating a DVD+R disc.

Bits b3 to b0 shall specify the Version Number of the System Description

Byte 1 - Disc size and maximum transfer rate

Bits b7 to b4 shall specify the disc size,

they shall be set to 0000, indicating a 120 mm disc

Bits b3 to b0 shall specify the maximum read transfer rate.

These bits may be set to one of the following values, depending on the maximum read-out speed needed by the application:

0000: a maximum transfer rate of 2,52 Mbits/s
0001: a maximum transfer rate of 5,04 Mbits/s
0010: a maximum transfer rate of 10,08 Mbits/s
1111: no maximum transfer rate is specified.

All other combinations are reserved and shall not be used.

Byte 2 - Disc structure

| | |
|---|---|
| Bit b7 to b4 | shall be set to 0000 |
| Bits b3 to b0 | shall specify the type of the recording layer(s): |
| | they shall be set to 0010, indicating a write-once recording layer. |
| Bytes 4 to 15 - Byte 4 | Data Zone allocation shall be set to (00). |
| Bytes 5 to 7 | shall be set to (030000) to specify PSN 196.608 of the first Physical Sector of the Data Zone |
| Byte 8 | shall be set to (00). |
| Bytes 9 to 11 | shall specify the Sector Number of the last Physical Sector of the Data Zone of the first Session. |
| Bytes 12 to 15 | shall be set to (00) |
| Bytes 256 to 2 | 047 - Reserved. These remaining bytes have no relation to the ADIP information and shall be set to zero (00). |

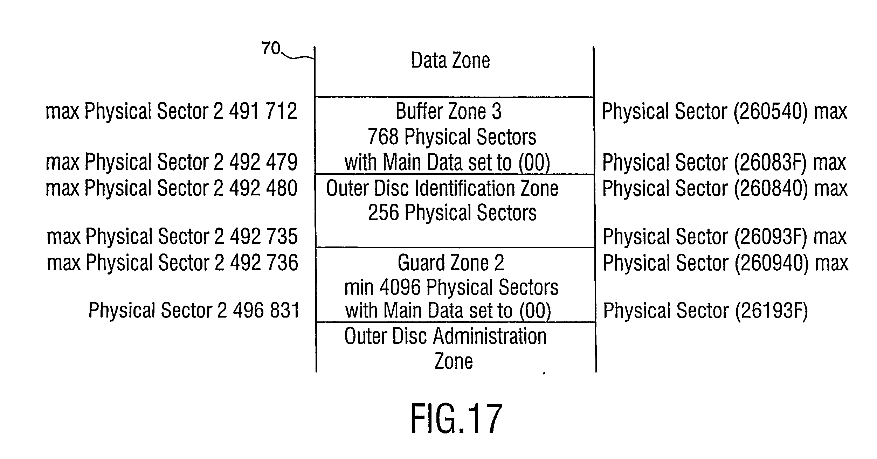

Figure 17 shows the Lead-Out zone. At the top the data zone 70 for recording user data is shown. The data zone has 2.295.104 Physical Sectors of user data area. The start radius of the Data Zone is determined by the location of ADIP Physical Address (00C000). After the Data zone follows the Lead-out Zone. The Lead-out Zone is located at the outer side of the Information Zone. Figure 17 shows the following parts:

- Buffer Zone 3: This recorded Zone shall consist of 768 Physical Sectors. The last possible start location of Buffer Zone 3 is (260540). The Main Data of the Data Frames in this Zone shall be set to all (00).
- Outer Disc Identification Zone: 256 Physical Sectors reserved for information agreed upon by the data interchange parties. Each set of 16 Physical Sectors from one ECC Block is either a Disc Control Block (DCB) or recorded with all (00) Main Data. The contents of this Zone shall be equivalent to the contents of the last Inner Session Identification Zone (or to the contents of the Inner Disc Identification Zone in case of a Single-session disc).
- Guard Zone 2: This Guard Zone is used as a protection for separating test writing zones from information zones containing user data. This Zone shall be filled with Main Data set to (00). This zone shall contain a minimum of 4096 Physical Sectors.

- Outer Drive Area: The Outer Drive Area is the outermost zone of the disc which is used by the drive for performing disc tests and OPC algorithms.

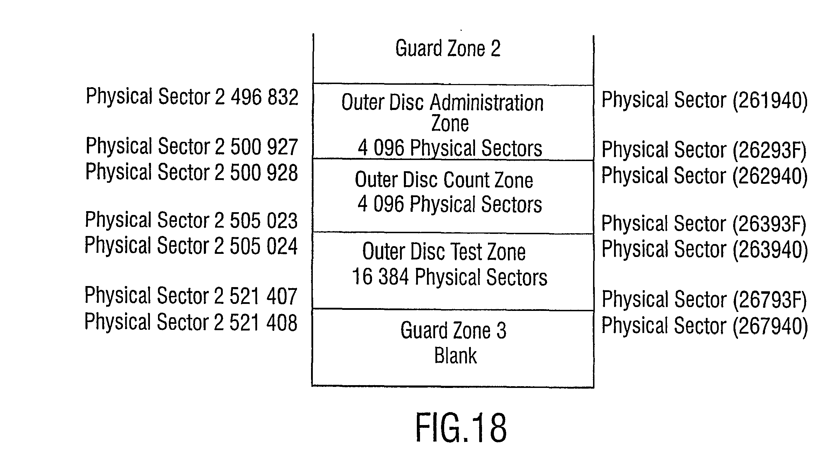

Figure 18 shows the Outer Drive Area, starting at the Guard zone 2. Then the following parts are shown:

- Outer Disc Administration Zone: 4096 Physical Sectors to be used for optional drive specific information. The first 16 physical sectors of this Zone shall be filled with all Main Data set to (00). This zone can be used in the same way as the Inner Disc Administration Zone (see 0).
- Outer Disc Count Zone: 4096 Physical Sectors reserved for counting the number of OPC algorithms performed in the Outer Disc Test Zone.
- Outer Disc Test Zone: 16384 Physical Sectors reserved for drive testing and OPC algorithms. Whenever an ECC Block or part of it in the Outer Disc Test Zone has been recorded, the ECC Block shall be flagged by recording 4 Physical Sectors in the Outer Disc Count Zone.
- Guard Zone 3: This Zone shall remain blank.

Figure 19 shows the layout of the Information Zone of a Multi-session disc. There can exist more than one session on the disc; session 1, session 2 and the last session N are shown. A session with an Intro and a Closure is called a Closed Session. The first Session shall be preceded by a Lead-in Zone instead of an Intro Zone, the final Session shall be followed by a Lead-out Zone instead of a Closure Zone. Once a Lead-out Zone has been recorded, the disc is called "finalized" and no additional recordings to the disc shall be allowed. A session without an Intro and a Closure is called an Open Session. All sessions must be Closed Sessions, except for the last one, which is allowed to be an Open Session. User Data can only be appended to an Open Session. If all session are closed, a new Open Session can be added. The first Closed Session on the disc shall have a Lead-in as described with Figure 15. Subsequent Closed Sessions shall have an Intro as defined below. Every Closed Session shall have a Closure as defined below, except for the Final Session, which shall have a Lead-out as described with reference to Figure 17.

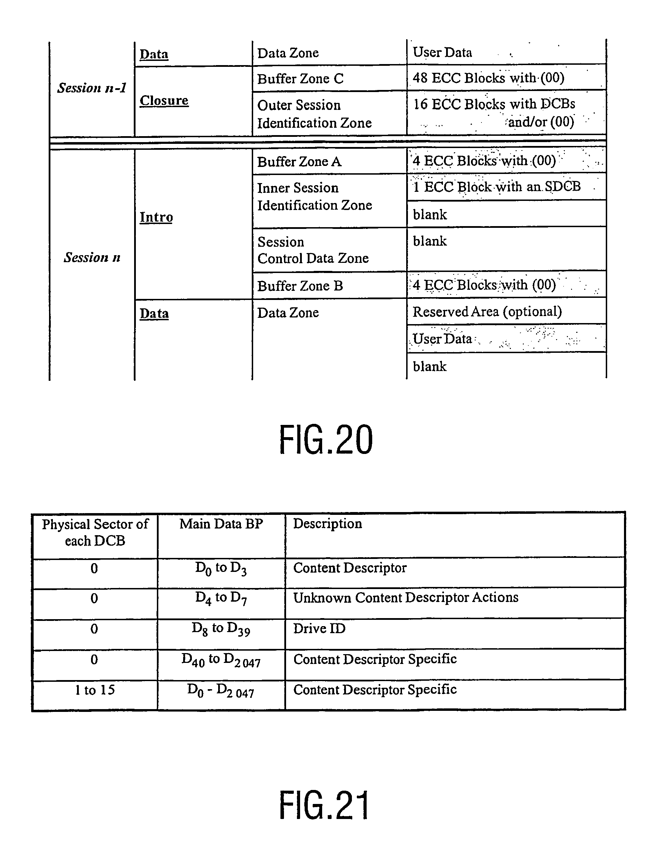

Each new Session that occurs after the first Session starting at PSN 30000, shall start with an Intro Zone. The Intro Zone consists of a Buffer Zone A, an Inner Session Identification Zone, a Session Control Data Zone and a Buffer Zone B. All Physical Sectors in the Intro Zone shall have bits b27 to b26 of the Data Frame set to ZERO ZERO, identifying the Intro Zone as if it was a Data Zone as described with reference to Figure 9. The Buffer Zone A consists of 64 Physical Sectors which shall be set (00). The Inner Session Identification Zone consists of 256 Physical Sectors reserved for information agreed upon by the data interchange parties. Each set of 16 Physical Sectors from one ECC Block is either a Disc Control Block (DCB) (see Figure 21) or recorded with all (00) Main Data. Each ECC Block in this Zone following one recorded with all (00) Main Data shall also be recorded with all (00) Main Data. The Session Control Data Zone consists of 640 Physical Sectors from 40 ECC Blocks. The content of the 16 Physical Sectors of each ECC Block is repeated 40 times. The structure of a Control Data Block shall be as shown in Figure 16. Finally Buffer Zone B consists of 64 Physical Sectors which shall be set (00).

Each Session shall end with a Closure Zone consisting of two parts; a Buffer Zone C and an Outer Session Identification Zone. All Physical Sectors in the Closure Zone shall have bits b27 to b26 of the Data Frame set to ZERO ZERO, identifying the Closure Zone as if it was a Data Zone. The Buffer Zone C consists of 768 Physical Sectors which shall be set (00). The Outer Session Identification Zone consists of 256 Physical Sectors reserved for information agreed upon by the data interchange parties. Each set of 16 Physical Sectors from one ECC Block is either a Disc Control Block (DCB) (see Figure 21) or recorded with all (00) Main Data. The contents of this Zone shall be equivalent to the contents of the last Inner Identification Zone.

Write once type record carriers, e.g. DVD+R discs, shall be recorded sequentially from the inner side of the disc towards the outer side of the disc. Compatibility with Read Only devices can only be attained, when the disc has a Lead-in Zone, all Session have been closed and there are no blank areas between the start of the Lead-in Zone and the end of the last Closure or Lead-out Zone.

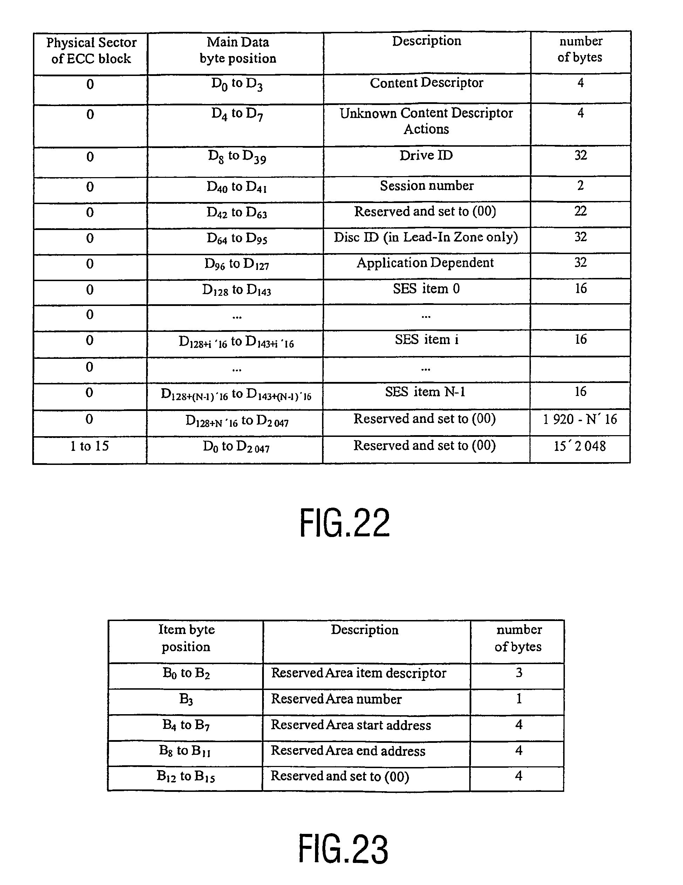

Figure 20 shows details of opened Session n. New data can be added to the disc by appending data to an Open Session. If all Sessions have been closed, a new Session shall be opened. A new Session is opened by recording Buffer Zone A and an SDCB (Session Disc Control Bloc, see Figure 22) in the first ECC Block of the Inner Session Identification Zone. Additionally Buffer Zone B of the Intro shall be recorded. The first Session on a blank disc is opened by recording Reserved Zone 2 plus an SDCB in the first ECC Block of the Inner Disc Identification Zone, and additionally Buffer Zone 2 of the Lead-in Zone in case of the first Session on a blank disc shall be recorded. User Data added to the Data Zone shall be linked immediately to previously written User Data in the Data Zone or to previously written data in one of the Reserved Areas. If a recorded area is preceded by a Reserved Area, an additional ECC Block is needed as a run-in for the first ECC Block of the recorded area. The additional ECC Block has to be considered as being part of the recorded area, and hence does not belong to the preceding Reserved Area.

The Closure Zone is defined as follows. At closing a Session, Buffer Zone C shall be recorded together with the Outer Session Identification Zone.

When no more sessions are to be recorded the user can decide to finalize the disc. When the disc is being finalized, instead of a Closure Zone a Lead-out Zone as described above with reference to Figure 17 shall be recorded. After finalizing the disc, adding data is no longer possible.

Figure 21 shows the general format of a Disc Control Block. Disc Control ECC Blocks (DCBs) are provided as a structure on the disc to include additional information for interchange between the data interchange parties. DCBs are recorded in the Inner and Outer Identification Zones of the disc or the Session. All DCBs shall have the same format for the first 40 data bytes. A special DCB is defined to reflect the status of the Session(s). If a Disc Control Block has to be updated, a substitute DCB shall be written immediately following the last written DCB in the Inner Session Identification Zone. Once a Session has been closed, the DCBs can no longer be updated. The Main Data of each Disc Control Block is defined as follows (see Figure 21):

Bytes D0 to D3 - Content Descriptor

- if set to (00000000) the DCB is unused. The Content Descriptor of all subsequent DCBs in this Inner or Outer Identification Zone shall be set to (00000000). All remaining bytes, D4 to D2 047 of Physical Sector 0 and D0 to D2 047 of Physical Sector 1 to 15 shall be set to (00).
- if set to (53444300) this DCB is a Session DCB (SDCB) as defined below.
- all other values for the Content Descriptor are reserved. Each new DCB added to the Inner or the Outer Identification Block shall be written at the first available unwritten DCB location. Each DCB with a Content Descriptor not set to (00000000) in the Inner Identification Zone of a Session shall have an identical DCB in the Outer Identification Zone in the respective Session. The order of the DCBs in the Inner Identification Zone shall be the same as the order in the Outer Identification Zone.

Bytes D4 to D7 - Unknown Content Descriptor Actions

- These bits are provided to specify required actions when the content and use of the DCB are unknown (i.e. the content descriptor is not set to a known assigned value). These bytes form a field consisting of 32 individual bits.

Bits b31 to b4 Reserved. These bits shall be set to all ZERO.

Bit b3    DCB rewrite, if set to ONE, substituting the current DCB shall not be allowed, else it shall be set to ZERO.

Bit b2    Formatting, if set to ONE, reformatting of the disc shall not be allowed or is not possible, else it shall be set to ZERO.

Bit b1    DCB read protect, if set to ONE, the information in this DCB is meant for use by the drive only and shall not be transferred outside the drive, else it shall be set ZERO.

Bit b0    Data Zone write, if set to ONE, recording shall not be allowed in the Data Zone, else it shall be set to ZERO.

Bytes D8 to D39 Drive ID

- Bytes D8 to D39 shall contain a unique descriptor, identifying the drive that has written the DCB. The format of this unique drive identifier shall be as follows: bytes D8 to D23 shall identify the manufacturer of the drive. Bytes D24 to D35 shall identify the model name/type number of the drive. Bytes D36 to D39 shall contain a unique serial number of the drive. The 4 bytes shall form one 32-bit binary number.
- Bytes D40 to D2047 Content Descriptor Specific. The bytes are specified by the description for the DCB with the actual Content Descriptor value.

Physical Sector 1 to 15: Bytes D0 to D2047 Content Descriptor Specific. The bytes are specified by the format description for the DCB with the actual Content Descriptor value.

Figure 22 shows the Format of the Session Disc Control Block (SDCB). Both the Lead-in/Intro Zone and the Lead-out/Closure Zone of a Session shall contain an SDCB containing a Session map of the Session. The SDCB in the Inner and Outer Session Identification Zones shall be identical and have the content as follows:

Physical Sector 0 / bytes $D_0$ to $D_3$ - Content Descriptor. These bytes identify the Session DCB and shall be set to (53444300), representing the characters "SDC" and the version number 0.

Physical Sector 0 / byte $D_4$ to $D_7$ - Unknown Content Descriptor Actions. The bytes shall be set to (0000000D) indicating that if this DCB is not known to the system, the DCB shall not be substituted, the disc can not be reformatted, writing to the Data Zone shall not be allowed, while transferring the DCB information from the drive to the host computer is allowed.

Physical Sector 0 / byte $D_8$ to $D_{39}$ - Drive ID. These bytes shall contain the drive ID as specified above with Figure 21, bytes $D_8$ to $D_{39}$.

Physical Sector 0 / bytes $D_{40}$ to $D_{41}$ - Session number. These bytes shall specify the sequence number of the Session to which the SDCB belongs. The first Session shall have sequence number 1 and each subsequent Session number shall be incremented by one.

Physical Sector 0 / byte $D_{42}$ to $D_{63}$ - Reserved. These bytes are reserved and shall be set to (00)

Physical Sector 0 / bytes $D_{64}$ to $D_{95}$ - Disc ID. In the SDCB in the Inner Disc Identification Zone in the Lead-in Zone of the first Session, these 32 bytes shall be recorded with a random, statistically unique, 256-bit binary number at initialization of the disc (opening of the first Session). In the SDCB in the Inner Session Identification Zone in the Intro of each next Session, bytes $D_{64}$ to $D_{95}$ shall be set to all (00).

Physical Sector 0 / byte $D_{96}$ to $D_{127}$ - Application dependent field. The field shall consist of 32 bytes and is reserved for use by the application to store information such as specific copy protection data. If this setting is not specified by the application, the bytes shall be set to (00).

In each Session these bytes can be set independently.

Physical Sector 0 / byte $D_{128}$ to $D_{2\,047}$ - Session items (SES). These bytes are grouped in units of 16 bytes each. Each unit of 16 bytes can contain one of two different types of SES items:

- a Reserved Area item that specifies Reserved Areas in the current Session
- a Previous Session item that specifies the start and end addresses of previous Sessions.

All unused bytes shall be set to (00).

Figure 23 shows a Reserved Area item. An SDCB can contain more than 1 Reserved Area item. If there are no Reserved Areas, there shall be no Reserved Area items. If a new Reserved Area has to be added to an existing Open Session, a new SDCB is written in the Inner Identification Zone of the current Session, immediately following the last SDCB. The last written SDCB in the Inner Identification Zone is the valid SDCB. Reserved Areas in a Session shall not be overlapping. The Reserved Area items shall be ordered with increasing addresses. The Figure shows the layout of the Reserve Area item as follows:

byte $B_0$ to $B_2$: these 3 bytes identify the item type and shall be set to (525356), representing the characters "RSV".
byte $B_3$: this byte shall specify the sequence number of the Reserved Area. The first Reserved Area in the Session shall have sequence number 1 and each subsequent Reserved Area number shall be incremented by one.
byte $B_4$ to $B_7$: these 4 bytes shall specify the PSN of the first Physical Sector belonging to the Reserved Area specified in this item.
byte $B_8$ to $B_{11}$: these 4 bytes shall specify the PSN of the last Physical Sector belonging to the Reserved Area specified in this item.
byte $B_{12}$ to $B_{15}$: these 4 bytes are reserved and shall be set to (00).

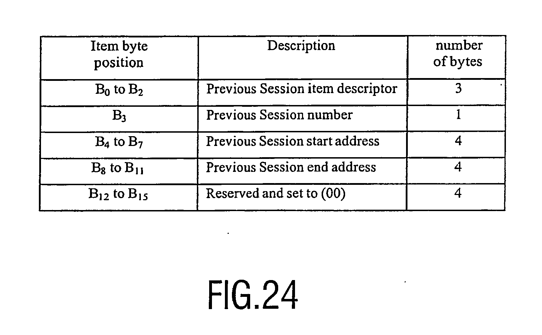

Figure 24 shows a Previous Session item. An SDCB shall contain a Previous Session item for each Session preceding the current Session. The SDCB of the first Session shall not contain a Previous Session item. The Previous Session items shall be ordered with increasing addresses. The Figure shows the layout of the Previous Session item as follows:

byte $B_0$ to $B_2$: these 3 bytes identify the item type and shall be set to (53534E), representing the characters "SSN".
byte $B_3$: this byte shall specify the sequence number of the Previous Session specified in this item.
byte $B_4$ to $B_7$: these 4 bytes shall specify the PSN of the first Physical Sector in the Data Zone of the Previous Session specified in this item.
byte $B_8$ to $B_{11}$: these 4 bytes shall specify the PSN of the last Physical Sector in the Data Zone of the Previous Session specified in this item.
byte $B_{12}$ to $B_{15}$: these 4 bytes are reserved and shall be set to (00).

Although the invention has been explained mainly by embodiments using the DVD+R, similar embodiments are suitable for other optical recording systems. Also for the information carrier an optical disc has been described, but other media, such as a magnetic disc or tape, may be used. It is noted, that in this document the word 'comprising' does not exclude the presence of other elements or steps than those listed and the word 'a' or 'an' preceding an element does not exclude the presence of a plurality of such elements, that any reference signs do not limit the scope of the claims.

**Claims**

1. Device for recording information on a track (9) of a record carrier (11), which record carrier (11) comprises a disc information area comprising a disc information block comprising a parameter for controlling the recording of information on the track of the record carrier (11), the device comprising disc information reading means (35) for reading the disc information block, **characterized in that** the disc information reading means (35) are arranged for reading at least one extended information block in the disc information area which extended information block comprises at least one additional parameter and a block version number indicator indicative of the definition of the additional parameter.

2. Device as claimed in claim 1, **characterized in that** disc information reading means (35) are arranged for reading the disc information area of a record carrier (11) which disc information area comprises extended information indicators which indicate the presence and location of the extended information blocks.

3. Device as claimed in one of the preceding claims, **characterized in that** disc information reading means (35) are arranged for reading the disc information area of a record carrier (35) which disc information area comprises more than one extended information block and that a predetermined value of the block version number of an extended information block indicates that that parameter block is a continuation of a preceding extended information block.

4. Device as claimed in one of the preceding claims, **characterized in that** the disc information reading means (35) are arranged for reading the disc information area of a record carrier (11) which disc information area comprises six extended information blocks.

5. Record carrier (11) having a track (9) for recording information, the record carrier (11) comprising a disc information area comprising a disc information block comprising a parameter for controlling the recording of information on the track of the record carrier (11), **characterized in that** the disc information area further contains at least one extended information block which extended information block comprises at least one additional parameter and a block version number indicator indicative of the definition of the additional parameter.

6. Record carrier (11) as claimed in claim 5, **characterized in that** the information area further contains extended information indicators which indicate the presence and location of the extended information blocks.

7. Record carrier (11) as claimed in one of the claims 5 and 6, **characterized in that** the information area contains more than one extended information block and that a predetermined value of the block version number of an extended information block indicates that that parameter block is a continuation of a preceding extended information block.

8. Record carrier (11) as claimed in one of the claims 5, 6 and 7, **characterized in that** the information area contains six extended information blocks.

9. Method of recording information on a track (9) of a record carrier (11), which record carrier (11) comprises a disc information area comprising a disc information block comprising a parameter for controlling the recording of information on the track of the record carrier (11), the method comprising a step of reading the disc information area **characterized in that** the method further comprises a step of reading at least one extended information block in the disc information area which extended information block comprises at least one additional parameter and a block version number indicator indicative of the definition of the additional parameter.

10. Method as claimed in claim 9, **characterized in that** the method comprises a step of reading the disc information area of a record carrier (11) which disc information area comprises six extended information blocks.

11. Method as claimed in one of the claims 9 and 10, **characterized in that** the method comprises a step of reading the disc information area of a record carrier (11) which disc information area comprises extended information indicators which indicate the presence and location of the extended information blocks.

12. Method as claimed in one of the claims 9, 10 and 11, **characterized in that** the method comprises a step of reading the disc information area of a record carrier (11) which disc information area comprises more than one extended information block and that a predetermined value of the block version number of an extended information block indicates that that parameter block is a continuation of a preceding parameter block.

**Patentansprüche**

1. Einrichtung zum Aufzeichnen von Information in einer Spur (9) eines Aufzeichnungsträgers (11), wobei der genannte Aufzeichnungsträger (11) eine Diskinformation aufweist, die einen Diskinformationsblock mit einem Parameter zur Steuerung der Aufzeichnung von Information in der Spur des Aufzeichnungsträgers (11) umfasst, wobei die Einrichtung Diskinformationsauslesemittel (35) zum Auslesen des Diskinformationsblocks enthält, **dadurch gekennzeichnet, dass** die Diskinformationsauslesemittel (35) zum Auslesen wenigstens eines erweiterten Informationsblocks in dem Diskinformationsgebiet vorgesehen sind, wobei dieser erweiterte Informationsblock wenigstens einen zusätzlichen Parameter und einen Blockversionsnummerindikator umfasst, der auf die Definition des zusätzlichen Parameters hindeutet.

2. Einrichtung nach Anspruch 1, **dadurch gekennzeichnet, dass** die Diskinformationsauslesemittel (35) zum Auslesen des Diskinformationsgebietes eines Aufzeichnungsträgers (11) vorgesehen sind, wobei dieses Diskinformationsgebiet erweiterte Informationsindikatoren aufweist, die das Vorhandensein und die Stelle der erweiterten Informationsblöcke angeben.

3. Einrichtung nach einem der vorstehenden Ansprüche, **dadurch gekennzeichnet, dass** Diskinformationsauslesemittel (35) zum Auslesen des Diskinformationsgebietes eines Aufzeichnungsträgers (11) vorgesehen sind, wobei dieses Diskinformationsgebiet mehr als einen erweiterten Informationsblock aufweist und dass ein vorbestimmter Wert der Blockversionsnummer eines erweiterten Informationsblocks angibt, dass dieser Parameterblock eine Fortsetzung eines vorhergehenden erweiterten Informationsblock ist.

4. Einrichtung nach einem der vorstehenden Ansprüche, **dadurch gekennzeichnet, dass** die Diskinformationsauslesemittel (35) zum Auslesen des Diskinformationsgebietes eines Aufzeichnungsträgers (11) vorgesehen sind, wobei dieses Diskinformationsgebiet sechs erweiterte Informationsblöcke aufweist.

5. Aufzeichnungsträger (11) mit einer Spur (9) zum Aufzeichnen von Information, wobei der Aufzeichnungsträger (11) ein Diskinformationsgebiet mit einem Diskinformationsblock mit einem Parameter zur Steuerung der Aufzeichnung von Information in der Spur des Aufzeichnungsträgers (11) aufweist, **dadurch gekennzeichnet, dass** das Diskinformationsgebiet weiterhin wenigstens einen erweiterten Informationsblock aufweist, wobei dieser erweiterte Informationsblock wenigstens einen zusätzlichen Parameter und einen Blockversionsnummerindikator aufweist, der die Definition des zusätzlichen Parameters angibt.

6. Aufzeichnungsträger (11) nach Anspruch 5, **dadurch gekennzeichnet, dass** das Informationsgebiet weiterhin erweiterte Informationsindikatoren aufweist, die das Vorhandensein und die Stelle der erweiterten Informationsblöcke angeben.

7. Aufzeichnungsträger (11) nach einem der Ansprüche 5 und 6, **dadurch gekennzeichnet, dass** das Informationsgebiet mehr als nur einen erweiterten Informationsblock aufweist und dass ein vorbestimmter Wert der Blockversionsnummer eines erweiterten Informationsblocks angibt, dass dieser Parameterblock eine Fortsetzung eines vorhergehenden erweiterten Informationsblocks ist.

8. Aufzeichnungsträger (11) nach einem der Ansprüche 5, 6 und 7, **dadurch gekennzeichnet, dass** das Informationsgebiet sechs erweiterte Informationsblöcke aufweist.

9. Verfahren zum Aufzeichnen von Information in einer Spur (9) eines Aufzeichnungsträgers (11), wobei der Aufzeichnungsträger (11) ein Diskinformationsgebiet mit einem Diskinformationsblock aufweist, der einen Parameter zur Steuerung der Aufzeichnung von Information in der Spur des Aufzeichnungsträgers (11) aufweist, wobei das Verfahren einen Verfahrensschritt umfasst: und zwar das Auslesen des Diskinformationsgebiets, **dadurch gekennzeichnet, dass** das Verfahren weiterhin einen Verfahrensschritt umfasst: und zwar das Auslesen wenigstens eines erweiterten Informationsblocks in dem Diskinformationsgebiet, wobei dieser erweiterte Informationsblock wenigstens einen zusätzlichen Parameter und einen Blockversionsindikator enthält, der die Definition des zusätzlichen Parameters angibt.

**10.** Verfahren nach Anspruch 9, **dadurch gekennzeichnet, dass** das Verfahren einen Verfahrensschritt umfass: und zwar das Auslesen des Diskinformationsgebietes eines Aufzeichnungsträgers (11), wobei dieses Diskinformationsgebiet sechs erweiterte Informationsblöcke aufweist.

**11.** Verfahren nach einem der Ansprüche 9 und 10, **dadurch gekennzeichnet, dass** das Verfahren einen Verfahrensschritt umfasst, und zwar das Auslesen des Diskinformationsgebietes eines Aufzeichnungsträgers (11), wobei dieses Diskinformationsgebiet erweiterte Informationsindikatoren aufweist, die das Vorhandensein und die Stelle der erweiterten Informationsblöcke angeben.

**12.** Verfahren nach Anspruch 9, 10 und 11, **dadurch gekennzeichnet, dass** das Verfahren einen Verfahrensschritt umfasst, und zwar das Auslesen des Diskinformationsgebietes eines Aufzeichnungsträgers (11), wobei dieses Diskinformationsgebiet mehr als nur einen erweiterten Informationsblock aufweist und dass ein vorbestimmter Wert der Blockversionsnummer eines erweiterten Informationsblocks angibt, dass dieser Parameterblock eine Fortsetzung eines vorhergehenden Parameterblocks ist.

## Revendications

**1.** Dispositif pour enregistrer des informations sur une piste (9) d'un support d'enregistrement (11), lequel support d'enregistrement (11) comprend une zone d'informations de disque comprenant un bloc d'informations de disque comprenant un paramètre pour commander l'enregistrement d'informations sur la piste du support d'enregistrement (11), le dispositif comprenant un moyen de lecture d'informations de disque (35) pour lire le bloc d'informations de disque, **caractérisé en ce que** le moyen de lecture d'informations de disque (35) est agencé pour lire au moins un bloc d'informations étendues dans la zone d'informations de disque, lequel bloc d'informations étendues comprend au moins un paramètre supplémentaire et un indicateur de numéro de version de bloc indicatif de la définition du paramètre supplémentaire.

**2.** Dispositif selon la revendication 1, **caractérisé en ce que** le moyen de lecture d'informations de disque (35) est agencé pour lire la zone d'informations de disque d'un support d'enregistrement (11), laquelle zone d'informations de disque comprend des indicateurs d'informations étendues qui indiquent la présence et l'emplacement des blocs d'informations étendues.

**3.** Dispositif selon l'une des revendications précédentes, **caractérisé en ce que** le moyen de lecture d'informations de disque (35) est agencé pour lire la zone d'informations de disque d'un support d'enregistrement (35), laquelle zone d'informations de disque comprend plusieurs blocs d'informations étendues et **en ce qu'**une valeur prédéterminée du numéro de version de bloc d'un bloc d'informations étendues indique que ce bloc de paramètres est une continuation d'un bloc d'informations étendues précédent.

**4.** Dispositif selon l'une des revendications précédentes, **caractérisé en ce que** le moyen de lecture d'informations de disque (35) est agencé pour lire la zone d'informations de disque d'un support d'enregistrement (11), laquelle zone d'informations de disque comprend six blocs d'informations étendues.

**5.** Support d'enregistrement (11) ayant une piste (9) pour enregistrer des informations, le support d'enregistrement (11) comprenant une zone d'informations de disque comprenant un bloc d'informations de disque comprenant un paramètre pour commander l'enregistrement d'informations sur la piste du support d'enregistrement (11), **caractérisé en ce que** la zone d'informations de disque contient en outre au moins un bloc d'informations étendues, lequel bloc d'informations étendues comprend au moins un paramètre supplémentaire et un indicateur de numéro de version de bloc indicatif de la définition du paramètre supplémentaire.

**6.** Support d'enregistrement (11) selon la revendication 5, **caractérisé en ce que** la zone d'informations contient en outre des indicateurs d'informations étendues qui indiquent la présence et l'emplacement des blocs d'informations étendues.

**7.** Support d'enregistrement (11) selon l'une des revendications 5 et 6, **caractérisé en ce que** la zone d'informations contient plusieurs blocs d'informations étendues et **en ce qu'**une valeur prédéterminée du numéro de version de bloc d'un bloc d'informations étendues indique que ce bloc de paramètres est une continuation d'un bloc d'informations étendues précédent.

8. Support d'enregistrement (11) selon l'une des revendications 5, 6 et 7, **caractérisé en ce que** la zone d'informations contient six blocs d'informations étendues.

9. Procédé d'enregistrement d'informations sur une piste (9) d'un support d'enregistrement (11), lequel support d'enregistrement (11) comprend une zone d'informations de disque comprenant un bloc d'informations de disque comprenant un paramètre pour commander l'enregistrement des informations sur la piste du support d'enregistrement (11), le procédé comprenant une étape consistant à lire la zone d'informations de disque, **caractérisé en ce que** le procédé comprend en outre une étape consistant à lire au moins un bloc d'informations étendues dans la zone d'informations de disque, lequel bloc d'informations étendues comprend au moins un paramètre supplémentaire et un indicateur de numéro de version de bloc indicatif de la définition du paramètre supplémentaire.

10. Procédé selon la revendication 9, **caractérisé en ce que** le procédé comprend une étape consistant à lire la zone d'informations de disque d'un support d'enregistrement (11), laquelle zone d'informations de disque comprend six blocs d'informations étendues.

11. Procédé selon l'une des revendications 9 et 10, **caractérisé en ce que** le procédé comprend une étape consistant à lire la zone d'informations de disque d'un support d'enregistrement (11), laquelle zone d'informations de disque comprend des indicateurs d'informations étendues qui indiquent la présence et l'emplacement des blocs d'informations étendues.

12. Procédé selon l'une des revendications 9, 10 et 11, **caractérisé en ce que** le procédé comprend une étape consistant à lire la zone d'informations de disque d'un support d'enregistrement (11), laquelle zone d'informations de disque comprend plusieurs blocs d'informations étendues, et **en ce qu'**une valeur prédéterminée du numéro de version de bloc d'un bloc d'informations étendues indique que ce bloc de paramètres est une continuation d'un bloc de paramètres précédent.

FIG. 1b

FIG. 1a

FIG. 2

EP 1 483 760 B1

2 Sync Frames

|←————— 1 488 Channel bits —————→| |←————— 1 488 Channel bits —————→|

37 | Sync | data | Sync | data |

|←————— 16 wobbles —————→| |←—— 16 wobbles ——→|

38

one ADIP unit
|← 8 wobbles →| |←——————— 85 monotone wobbles ———————→|

|←———————————————— 93 wobbles ————————————————→|

39

FIG.3

EP 1 483 760 B1

| | | | wobble 0 | wobble 1 to 3 | wobble 4 to 7 | | |
|---|---|---|---|---|---|---|---|
| ↑ | ↑ | sync unit | | word sync | | ↑ | ↑ |
| | | data unit | bit sync | | data bit 1 | | |
| | ADIP | data unit | bit sync | | data bit 2 | 4 Physical | |
| 4 | word | : | : | : | : | Sectors | 1 |
| ADIP | | : | : | : | : | | ECC |
| words | ↓ | data unit | bit sync | | data bit 51 | ↓ | Block |
| | | | | | | | |
| | | | | | | | |
| | | | | | | | |
| ↓ | | | | | | | ↓ |

FIG.4

| | | | | | | | |
|---|---|---|---|---|---|---|---|
| nibble $N_0$ | bit 0 | bit 1 | bit 2 | bit 3 | ↑ | | |
| nibble $N_1$ | bit 4 | bit 5 | : | : | 6 | | ADIP |
| : | : | : | : | : | nibbles | | address |
| : | bit 20 | : | : | bit 23 | ↓ | | |
| : | bit 24 | | | | ↑ 2 | | AUX |
| nibble $N_7$ | bit 28 | | : | bit 31 | ↓ nibbles | | data |
| nibble $N_8$ | bit 32 | : | : | : | ↑ | | Nibble |
| : | : | : | : | : | 5 | | based |
| : | : | : | : | : | nibbles | | R-S |
| nibble $N_{12}$ | bit 48 | bit 49 | bit 50 | bit 51 | ↓ | | ECC |

FIG.5

EP 1 483 760 B1

ADIP sync unit

wobble 92 | wobble 0 | 1 | 2 | 3 | 4 | 5 | 6 | 7 | 8

4 NW        4 PW

## FIG. 6a

ADIP data unit with data set to ZERO

wobble 92 | wobble 0 | 1 | 2 | 3 | 4 | 5 | 6 | 7 | 8

1 NW    3 PW    2 PW    2 NW

## FIG. 6b

ADIP data unit with data set to ONE

wobble 92 | wobble 0 | 1 | 2 | 3 | 4 | 5 | 6 | 7 | 8

1 NW    3 PW    2 NW    2 PW

## FIG. 6c

| Byte number | Content | Number of bytes |
|---|---|---|
| 0 | **Disc Category and Version Number:** indicates the version of the disc and identifies the definitions of the data in bytes 0 to 63 (important for backwards compatibility). Drives not acquainted with the specific Version Number of a disc should not try to record on that disc using the information in bytes 0 to 63. | 1 |
| 1 | Disc size | 1 |
| 2 | Disc structure | 1 |
| 3 | Recording density | 1 |
| 4 to 15 | Data Zone allocation | 12 |
| 16 | Set to (00) | 1 |
| 17 | Reserved – All (00) | 1 |
| 18 | **Extended Information indicators** | 1 |
| 19 to 26 | Disc Manufacturer ID | 8 |
| 27 to 29 | Media type ID | 3 |
| 30 | Product revision number | 1 |
| 31 | number of Physical format information bytes in use in ADIP up to byte 63 (according to first generation: set to 56) | 1 |
| 32 | Reference recording velocity | 1 |
| 33 | Maximum recording velocity | 1 |
| 34 | Wavelength $l_{IND}$ | 1 |
| 35 | normalized Write power dependency on Wavelength ( $dP/dl$ )/$(P_{IND}/l_{IND})$ | 1 |
| 36 | Maximum read power at reference velocity | 1 |
| 37 | $P_{IND}$ at reference velocity | 1 |
| 38 | $b_{target}$ at reference velocity | 1 |
| 39 | Maximum read power at maximum velocity | 1 |
| 40 | $P_{IND}$ at maximum velocity | 1 |
| 41 | $b_{target}$ at maximum velocity | 1 |
| 42 | $T_{top}$ ($\geq$4) first pulse duration for cm $\geq$4 at reference velocity | 1 |
| 43 | $T_{top}$ (=3) first pulse duration for cm =3 at reference velocity | 1 |
| 44 | $T_{mp}$ multi pulse duration at reference velocity | 1 |
| 45 | $T_{lp}$ last pulse duration at reference velocity | 1 |
| 46 | $dT_{top}$ ($\geq$4) first pulse lead time for cm $\geq$4 at reference velocity | 1 |
| 47 | $dT_{top}$ (=3) first pulse lead time for cm =3 at reference velocity | 1 |
| 48 | $dT_{lc}$ 1$^{st}$ pulse leading edge correction for ps =3 at reference velocity | 1 |
| 49 | $T_{top}$ ($\geq$4) first pulse duration for cm $\geq$4 at maximum velocity | 1 |
| 50 | $T_{top}$ (=3) first pulse duration for cm =3 at maximum velocity | 1 |
| 51 | $T_{mp}$ multi pulse duration at maximum velocity | 1 |
| 52 | $T_{lp}$ last pulse duration at maximum velocity | 1 |
| 53 | $dT_{top}$ ($\geq$4) first pulse lead time for cm $\geq$4 at maximum velocity | 1 |
| 54 | $dT_{top}$ (=3) first pulse lead time for cm =3 at maximum velocity | 1 |
| 55 | $dT_{lc}$ 1$^{st}$ pulse leading edge correction for ps =3 at maximum velocity | 1 |
| 56 to 63 | Reserved – All (00) | 8 |
| 64 to 95 | Extended Information block 0 | 32 |
| 96 to 127 | Extended Information block 1 | 32 |
| 128 to 159 | Extended Information block 2 | 32 |
| 160 to 191 | Extended Information block 3 | 32 |
| 192 to 223 | Extended Information block 4 | 32 |
| 224 to 247 | Extended Information block 5 | 24 |
| 248 to 255 | Reserved for use in the Control Data Zone – All (00) | 8 |

# FIG.7

| bit 7 to bit 4 | $dT_{le}$ shift ($T_W$) |
|---|---|
| 0000 | 0 |
| 0001 | 0,0625 |
| 0010 | 0,1250 |
| 0011 | 0,1875 |
| 0100 | 0,2500 |
| 0101 to 1011 | reserved |
| 1100 | - 0,2500 |
| 1101 | - 0,1875 |
| 1110 | - 0,1250 |
| 1111 | - 0,0625 |

# FIG.8

Information Zone

Physical
Sector
Number

Inner
Drive
Area

Lead-in
Zone

Data Zone

Lead-out
Zone

Outer
Drive
Area

Address

(02FFFF) (030000)

Radius

FIG.9

| | Description | Nominal radius in mm | PSN of the first Physical Sector | Number of Physical Sectors |
|---|---|---|---|---|
| **Inner Drive Area** | Initial Zone | start 22,000 mm | -- | blank |
| | Inner Disc Test Zone | start 22,643 mm | (023480) | 16 384 |
| | Inner Disc Count Zone | start 23,079 mm | (027480) | 4 096 |
| | Inner Disc Administration Zone | start 23,186 mm | (028480) | 4 096 |
| | Session Map Zone | start 23,293 mm | (029480) | 4 096 |
| **Lead-in** | Guard Zone 1 | start 23,400 mm | (02A480) | 14 848 |
| | Reserved Zone 1 | | (02DE80) | 4 096 |
| | Reserved Zone 2 | | (02EE80) | 64 |
| | Inner Disc Identification Zone | | (02EEC0) | 256 |
| | Reserved Zone 3 | | (02EFC0) | 64 |
| | Reference Code Zone | start 23,896 mm | (02F000) | 32 |
| | Buffer Zone 1 | | (02F020) | 480 |
| | Control Data Zone | | (02F200) | 3 072 |
| | Buffer Zone 2 | | (02FE00) | 512 |
| **Data** | Data Zone | start 24,000 mm | (030000) | 2 295 104 max |
| **Lead-out** | Buffer Zone 3 | start 58,000 mm max | (260540) max | 768 |
| | Outer Disc Identification Zone | | (260840) max | 256 |
| | Guard Zone 2 | | (260940) max | 4096 min |
| **Outer Drive Area** | Outer Disc Administration Zone | start 58,053 mm | (261940) | 4096 |
| | Outer Disc Count Zone | start 58,096 mm | (262940) | 4096 |
| | Outer Disc Test Zone | start 58,139 mm | (263940) | 16 384 |
| | Guard Zone 3 | start 58,310 mm | (2652C0) | blank |

# FIG.10

Physical Sector 144 512

Physical Sector 160 895
Physical Sector 160 896

Physical Sector 164 991
Physical Sector 164 992

Physical Sector 169 087
Physical Sector 169 088

Physical Sector 173 183

| Initial Zone |
| --- |
| Inner Disc Test Zone<br>16 384 Physical Sectors |
| Inner Disc Count Zone<br>4 096 Physical Sectors |
| Inner Disc Administration Zone<br>4 096 Physical Sectors |
| Session Map Zone<br>4 096 Physical Sectors |
| Guard Zone 1 |

Physical Sector (023480)

Physical Sector (02747F)
Physical Sector (027480)

Physical Sector (02847F)
Physical Sector (028480)

Physical Sector (02947F)
Physical Sector (029480)

Physical Sector (02A47F)

## FIG.11

| Physical Sector<br>of SEM block | Main Data<br>byte position | Description | number<br>of bytes |
| --- | --- | --- | --- |
| 0 | $D_0$ to $D_3$ | Content Descriptor | 4 |
| 0 | $D_4$ to $D_7$ | Reserved and set to (00) | 4 |
| 0 | $D_8$ to $D_{39}$ | Drive ID | 32 |
| 0 | $D_{40}$ to $D_{63}$ | Reserved and set to (00) | 24 |
| 0 | $D_{64}$ to $D_{95}$ | Session item 0 | 16 |
| 0 | ... | | |
| 0 | $D_{64+i \times 16}$ to $D_{95+i \times 16}$ | Session item i | 16 |
| 0 | ... | ... | |
| 0 | $D_{64+(N-1) \times 16}$ to $D_{95+(N-1) \times 16}$ | Session item N-1 | 16 |
| 0 | $D_{64+N \times 16}$ to $D_{2\,047}$ | Reserved and set to (00) | 1 984 - Nx16 |
| 1 to 15 | $D_0$ to $D_{2\,047}$ | Reserved and set to (00) | 15x2 048 |

## FIG.12

| Item byte position | Description | number of bytes |
|---|---|---|
| $B_0$ to $B_2$ | Session item descriptor | 3 |
| $B_3$ | Session number | 1 |
| $B_4$ to $B_7$ | Session start address | 4 |
| $B_8$ to $B_{11}$ | Session end address | 4 |
| $B_{12}$ to $B_{15}$ | Reserved and set to (00) | 4 |

FIG.13

| SEM Blocks | (02A080)--(02A083) | (02A084)--(02A087) | ---- | (02A300)--(02A303) | (02A304)--(02A307) | --- | (02A478)--(02A47B) | (02A47C)--(02A47F) | Guard Zone 1 |
|---|---|---|---|---|---|---|---|---|---|

60

61  63  64  62

FIG.14

| | Session Map Zone | |
|---|---|---|
| Physical Sector 173 184 | Guard Zone 1<br>14 848 Physical Sectors<br>with Main Data set to (00) | Physical Sector (02A480) |
| Physical Sector 188 031 | | Physical Sector (02DE7F) |
| Physical Sector 188 032 | Reserved Zone 1<br>4 096 Physical Sectors | Physical Sector (02DE80) |
| Physical Sector 192 127 | | Physical Sector (02EE7F) |
| Physical Sector 192 128 | Reserved Zone 2<br>64 Physical Sectors | Physical Sector (02EE80) |
| Physical Sector 192 191 | | Physical Sector (02EEBF) |
| Physical Sector 192 192 | Inner Disc Identification Zone<br>256 Physical Sectors | Physical Sector (02EEC0) |
| Physical Sector 192 447 | | Physical Sector (02EFBF) |
| Physical Sector 192 448 | Reserved Zone 3<br>64 Physical Sectors | Physical Sector (02EFC0) |
| Physical Sector 192 511 | | Physical Sector (02EFFF) |
| Physical Sector 192 512 | Reference Code Zone<br>32 Physical Sectors | Physical Sector (02F000) |
| Physical Sector 192 543 | | Physical Sector (02F01F) |
| Physical Sector 192 544 | Buffer Zone 1<br>480 Physical Sectors<br>with Main Data set to (00) | Physical Sector (02F020) |
| Physical Sector 193 023 | | Physical Sector (02F1FF) |
| Physical Sector 193 024 | Control Data Zone<br>3 072 Physical Sectors | Physical Sector (02F200) |
| Physical Sector 196 095 | | Physical Sector (02FDFF) |
| Physical Sector 196 096 | Buffer Zone 2<br>512 Physical Sectors<br>with Main Data set to (00) | Physical Sector (02FE00) |
| Physical Sector 196 607 | | Physical Sector (02FFFF) |
| | Data Zone | |

## FIG.15

| Physical format information<br>2 048 bytes |
|---|
| Disc manufacturing information<br>2 048 bytes |
| Content provider information<br><br>14 X 2 048 bytes |

## FIG.16

EP 1 483 760 B1

| | | |
|---|---|---|
| 70 | Data Zone | |
| max Physical Sector 2 491 712 | Buffer Zone 3<br>768 Physical Sectors<br>with Main Data set to (00) | Physical Sector (260540) max |
| max Physical Sector 2 492 479 | | Physical Sector (26083F) max |
| max Physical Sector 2 492 480 | Outer Disc Identification Zone<br>256 Physical Sectors | Physical Sector (260840) max |
| max Physical Sector 2 492 735 | | Physical Sector (26093F) max |
| max Physical Sector 2 492 736 | Guard Zone 2<br>min 4096 Physical Sectors<br>with Main Data set to (00) | Physical Sector (260940) max |
| Physical Sector 2 496 831 | | Physical Sector (26193F) |
| | Outer Disc Administration<br>Zone | |

# FIG.17

| | Guard Zone 2 | |
|---|---|---|
| Physical Sector 2 496 832 | Outer Disc Administration Zone 4 096 Physical Sectors | Physical Sector (261940) |
| Physical Sector 2 500 927 | | Physical Sector (26293F) |
| Physical Sector 2 500 928 | Outer Disc Count Zone 4 096 Physical Sectors | Physical Sector (262940) |
| Physical Sector 2 505 023 | | Physical Sector (26393F) |
| Physical Sector 2 505 024 | Outer Disc Test Zone 16 384 Physical Sectors | Physical Sector (263940) |
| Physical Sector 2 521 407 | | Physical Sector (26793F) |
| Physical Sector 2 521 408 | Guard Zone 3 Blank | Physical Sector (267940) |

FIG.18

EP 1 483 760 B1

| Session | Zone | Description | | Number of Physical Sectors |
|---------|------|-------------|---|----------------------------|
| | Inner Drive Area | — | See Fig. 11 | — |
| Session 1 | Lead-in | ... | See Fig. 15 | ... |
| | | Reserved Zone 2 | | 64 |
| | | Inner Disc Identification Zone | | 256 |
| | | ... | | ... |
| | | Control Data Zone | | 3 072 |
| | | Buffer Zone 2 | | 512 |
| | Data | Data Zone | | 16 min |
| | Closure | Buffer Zone C | | 768 |
| | | Outer Session Identification Zone | | 256 |
| Session 2 | Intro | Buffer Zone A | | 64 |
| | | Inner Session Identification Zone | | 256 |
| | | Session Control Data Zone | | 640 |
| | | Buffer Zone B | | 64 |
| | Data | Data Zone | | 16 min |
| | Closure | Buffer Zone C | | 768 |
| | | Outer Session Identification Zone | | 256 |
| Session N | . . . | . | | ... ... |
| | Data | Data Zone | | |
| | Lead-out | Buffer Zone 3 | See Fig. 17 | 768 |
| | | Outer Disc Identification Zone | | 256 |
| | | ... | | ... |
| | Outer Drive Area | — | See Fig. 18 | — |

# FIG.19

|  |  |  |  |
|---|---|---|---|
| **Session _n-1_** | **Data** | Data Zone | User Data |
|  | **Closure** | Buffer Zone C | 48 ECC Blocks with (00) |
|  |  | Outer Session Identification Zone | 16 ECC Blocks with DCBs and/or (00) |
| **Session _n_** | **Intro** | Buffer Zone A | 4 ECC Blocks with (00) |
|  |  | Inner Session Identification Zone | 1 ECC Block with an SDCB |
|  |  |  | blank |
|  |  | Session Control Data Zone | blank |
|  |  | Buffer Zone B | 4 ECC Blocks with (00) |
|  | **Data** | Data Zone | Reserved Area (optional) |
|  |  |  | User Data |
|  |  |  | blank |

## FIG.20

| Physical Sector of each DCB | Main Data BP | Description |
|---|---|---|
| 0 | $D_0$ to $D_3$ | Content Descriptor |
| 0 | $D_4$ to $D_7$ | Unknown Content Descriptor Actions |
| 0 | $D_8$ to $D_{39}$ | Drive ID |
| 0 | $D_{40}$ to $D_{2\,047}$ | Content Descriptor Specific |
| 1 to 15 | $D_0$ - $D_{2\,047}$ | Content Descriptor Specific |

## FIG.21

| Physical Sector of ECC block | Main Data byte position | Description | number of bytes |
|---|---|---|---|
| 0 | $D_0$ to $D_3$ | Content Descriptor | 4 |
| 0 | $D_4$ to $D_7$ | Unknown Content Descriptor Actions | 4 |
| 0 | $D_8$ to $D_{39}$ | Drive ID | 32 |
| 0 | $D_{40}$ to $D_{41}$ | Session number | 2 |
| 0 | $D_{42}$ to $D_{63}$ | Reserved and set to (00) | 22 |
| 0 | $D_{64}$ to $D_{95}$ | Disc ID (in Lead-In Zone only) | 32 |
| 0 | $D_{96}$ to $D_{127}$ | Application Dependent | 32 |
| 0 | $D_{128}$ to $D_{143}$ | SES item 0 | 16 |
| 0 | ... | ... | |
| 0 | $D_{128+i}\,'16$ to $D_{143+i}\,'16$ | SES item i | 16 |
| 0 | ... | ... | |
| 0 | $D_{128+(N-1)}\,'16$ to $D_{143+(N-1)}\,'16$ | SES item N-1 | 16 |
| 0 | $D_{128+N}\,'16$ to $D_{2\,047}$ | Reserved and set to (00) | 1 920 - N' 16 |
| 1 to 15 | $D_0$ to $D_{2\,047}$ | Reserved and set to (00) | 15' 2 048 |

# FIG.22

| Item byte position | Description | number of bytes |
|---|---|---|
| $B_0$ to $B_2$ | Reserved Area item descriptor | 3 |
| $B_3$ | Reserved Area number | 1 |
| $B_4$ to $B_7$ | Reserved Area start address | 4 |
| $B_8$ to $B_{11}$ | Reserved Area end address | 4 |
| $B_{12}$ to $B_{15}$ | Reserved and set to (00) | 4 |

# FIG.23

| Item byte position | Description | number of bytes |
|---|---|---|
| $B_0$ to $B_2$ | Previous Session item descriptor | 3 |
| $B_3$ | Previous Session number | 1 |
| $B_4$ to $B_7$ | Previous Session start address | 4 |
| $B_8$ to $B_{11}$ | Previous Session end address | 4 |
| $B_{12}$ to $B_{15}$ | Reserved and set to (00) | 4 |

# FIG.24

**EP 1 483 760 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5001692 A
- EP 1134738 A

- WO 9816014 A1